# EUROPEAN PATENT SPECIFICATION

(11) **EP 4 510 092 B1**
(45) Date of publication and mention of the grant of the patent: **02.09.2026**
(21) Application number: 23810653.8
(22) Date of filing: 27.03.2023
(51) Int. Cl.: G06V 40/10, G06V 10/46

(54) **PALM CONTOUR EXTRACTION METHOD AND APPARATUS, AND CONTROL INSTRUCTION GENERATION METHOD AND APPARATUS**
HANDFLÄCHENKONTUREXTRAKTIONSVERFAHREN UND -VORRICHTUNG SOWIE STEUERUNGSBEFEHLSERZEUGUNGSVERFAHREN UND -VORRICHTUNG
PROCÉDÉ ET APPAREIL D'EXTRACTION DE CONTOUR DE PAUME, ET PROCÉDÉ ET APPAREIL DE GÉNÉRATION D'INSTRUCTION DE COMMANDE

(30) Priority: 27.05.2022 CN 202210587233
(43) Date of publication of application: 19.02.2025
(73) Proprietor: Tencent Technology (Shenzhen) Company Limited, Shenzhen, Guangdong 518057 (CN)
(72) Inventor: ZHANG, Zhiqiang, Shenzhen, Guangdong 518057 (CN); GUO, Runzeng, Shenzhen, Guangdong 518057 (CN); WANG, Shaoming, Shenzhen, Guangdong 518057 (CN); ZHANG, Xiaoyi, Shenzhen, Guangdong 518057 (CN)
(74) Representative: Nederlandsch Octrooibureau
(86) International application number: PCT/CN2023/083956
(87) International publication number: WO 2023/226578

(56) References cited:
- CN-A- 104 102 340
- CN-A- 112 198 962
- CN-A- 112 198 962
- CN-A- 114 299 604
- US-A1- 2016 373 438
- US-A1- 2017 277 963

## Description

### FIELD OF THE TECHNOLOGY

This application relates to the field of computer technologies, and in particular, to a method for extracting a palm contour, a computer device, a storage medium, and a computer program product.

### BACKGROUND OF THE DISCLOSURE

With the development of computer technologies, a palm extraction technology emerges. The palm extraction technology includes technical content of recognizing a palm contour from a palm image.

In the related art, various data processing is usually performed on pixel information of the palm image to extract the palm contour in the palm image, for example, binary processing and edge detection are performed on the palm image to extract the palm contour. However, the method for extracting a palm contour based on the pixel information of the palm image is susceptible to interference from image backgrounds, causing it impossible to extract an accurate palm contour. CN112198962A discloses a method for interacting with virtual reality equipment and virtual reality equipment. The method comprises the following steps: receiving a hand image shot by a camera; when apreset finger is recognized from the hand image, generating a ray control in the user interface according to the recognized relative position of the skeleton key point in the preset finger; and changing the display state of the control pointed by the ray control in the user interface according to the position of the ray control and the positions of other controls in the user interface. In some embodiments, a user finger can interact with the virtual reality equipment, and inconvenience brought by a handle used in the prior art is avoided.

Embodiments of this application provide a method for extracting a palm contour, a computer device, a computer-readable storage medium, and a computer program product according to the appended claims 1, 12, 13 and 14.

The details of one or more embodiments of this application are disclosed in the following accompanying drawings and description. Other features, objectives and advantages of this application will become clear from the specification, accompanying drawings and claims.

### BRIEF DESCRIPTION OF THE DRAWINGS

To describe the technical solutions in the embodiments of this application more clearly, the following briefly describes the accompanying drawings required for describing the embodiments. Apparently, the accompanying drawings in the following description show merely some embodiments of this application, and a person of ordinary skill in the art may still derive other drawings from these accompanying drawings without creative efforts.
FIG. 1 is a diagram of an application environment of a method for extracting a palm contour and a method for generating an instruction for controlling an object according to an embodiment.
FIG. 2 is a schematic flowchart of a method for extracting a palm contour according to an embodiment.
FIG. 3 is a schematic diagram of palm bone points according to an embodiment.
FIG. 4 is schematic diagrams of movement directions corresponding to auxiliary lines according to an embodiment.
FIG. 5 is schematic diagrams of contour point sorting identifiers and a palm contour according to an embodiment.
FIG. 6 is a schematic flowchart of a method for generating an instruction for controlling an object according to an embodiment.
FIG. 7A is a schematic diagram of a palm bone point recognition result according to an embodiment.
FIG. 7B is a schematic diagram of a palm contour point recognition result according to an embodiment.
FIG. 8A is a schematic diagram of calculating coordinates of a palm outer contour according to an embodiment.
FIG. 8B is a schematic diagram of calculating coordinates of an interdigit according to an embodiment.
FIG. 8C is a schematic diagram of calculating coordinates of a finger contour edge according to an embodiment.
FIG. 8D is a schematic diagram of a palm contour according to an embodiment.
FIG. 9 is a schematic diagram of palm-scanning payment according to an embodiment.
FIG. 10 is a structural block diagram of An apparatus for extracting a palm contour according to an embodiment.
FIG. 11 is a structural block diagram of An apparatus for extracting a palm contour according to another embodiment.
FIG. 12 is a structural block diagram of an apparatus for generating an instruction for controlling an object according to an embodiment.
FIG. 13 is an internal structure diagram of a computer device according to an embodiment.
FIG. 14 is an internal structure diagram of a computer device according to another embodiment.

### DESCRIPTION OF EMBODIMENTS

To make the objectives, technical solutions, and advantages of this application clearer and more comprehensible, this application is further described below in detail with reference to the accompanying drawings and embodiments. The specific embodiments described herein are merely for explaining this application, but are not intended to limit this application.

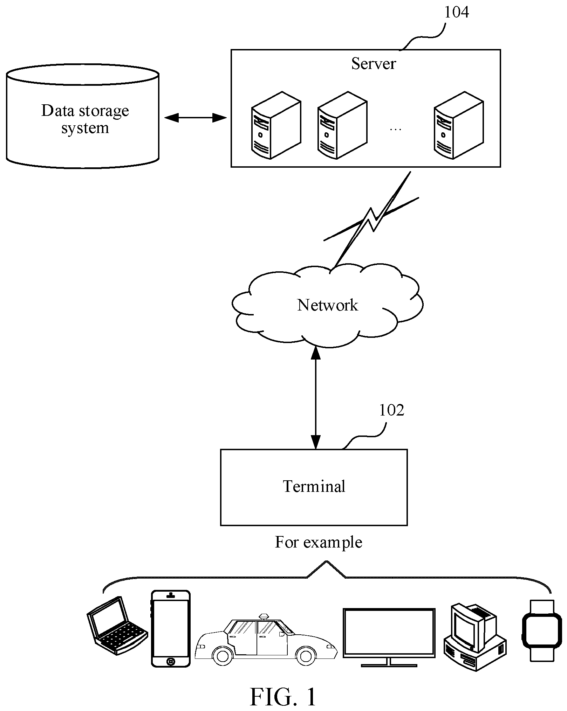

In the embodiments of the present disclosure including the embodiments of both the claims and the specification (hereinafter referred to as "all embodiments of the present disclosure"), a method for extracting a palm contour and a method for generating an instruction for controlling an object provided may be applied to an application environment shown in FIG. 1. A terminal 102 may communicate with a server 104 via a network. A data storage system may store data that the server 104 needs to process. The data storage system may be integrated on the server 104, or placed on a cloud or another server. The terminal 102 may be, but not limited to, a desktop computer, a notebook computer, a smartphone, a tablet computer, an Internet of Things device, and a portable wearable device. The Internet of Things device may be a smart speaker, a smart television, a smart air conditioner, a smart in-vehicle device, or the like. The portable wearable device may be a smart watch, a smart band, a head-mounted device, or the like. The server 104 may be implemented as an independent server or as a server cluster including a plurality of servers or as a cloud server.

In all embodiments of the present disclosure, both a terminal and a server may be configured to separately perform the method for extracting a palm contour and the method for generating an instruction for controlling an object provided in the embodiments of this application.

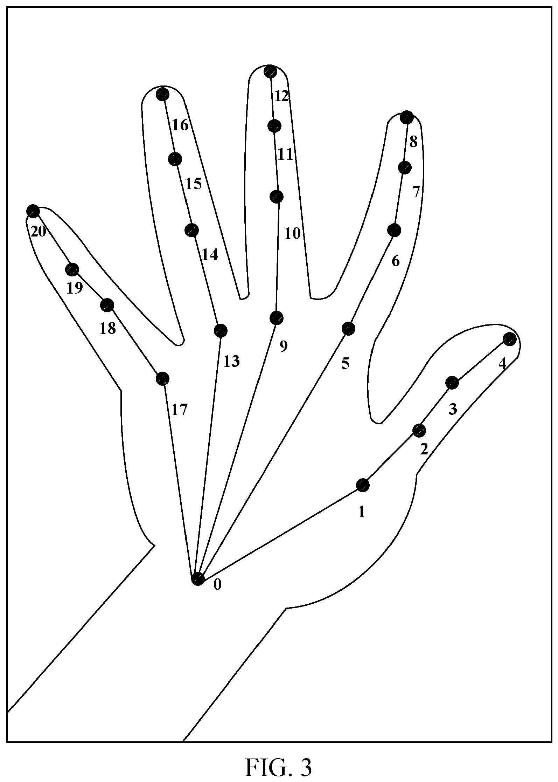

Based on the types and connection methods of bones, the skeletal structure of a palm can be divided into carpal bones, metacarpal bones, phalanges, carpometacarpal joints, metacarpophalangeal joints, proximal interphalangeal joints, and distal interphalangeal joints. In the field of gesture recognition, palm bone points (also known as palm keypoints) refer to the key points that constitute or describe the skeletal structure of the palm, which are used to track and analyze gestures and palm movements. Generally, 21 palm bone points are used to describe the skeletal structure of the palm (as shown in FIG. 3). These 21 palm bone points are: wrist point (dot 0 in FIG. 3, which belongs to the carpal bones), thumb carpometacarpal joint point (dot 1 in FIG. 3, which belongs to the thumb and carpometacarpal joint), thumb metacarpophalangeal joint point (dot 2 in FIG. 3, which belongs to the thumb and metacarpophalangeal joint), thumb proximal interphalangeal joint point (dot 3 in FIG. 3, which belongs to the thumb and proximal interphalangeal joint), thumb tip (dot 4 in FIG. 3, which belongs to the distal phalanx of the thumb), index finger metacarpophalangeal joint point (dot 5 in FIG. 3, which belongs to the index finger and metacarpophalangeal joint), index finger proximal interphalangeal joint point (dot 6 in FIG. 3, which belongs to the index finger and proximal interphalangeal joint), index finger distal interphalangeal joint point (dot 7 in FIG. 3, which belongs to the index finger and distal interphalangeal joint), index finger tip (dot 8 in FIG. 3, which belongs to the distal phalanx of the index finger), middle finger metacarpophalangeal joint point (dot 9 in FIG. 3, which belongs to the middle finger and metacarpophalangeal joint), middle finger proximal interphalangeal joint point (dot 10 in FIG. 3, which belongs to the middle finger and proximal interphalangeal joint), middle finger distal interphalangeal joint point (dot 11 in FIG. 3, which belongs to the middle finger and distal interphalangeal joint), middle finger tip (dot 12 in FIG. 3, which belongs to the distal phalanx of the middle finger), ring finger metacarpophalangeal joint point (dot 13 in FIG. 3, which belongs to the ring finger and metacarpophalangeal joint), ring finger proximal interphalangeal joint point (dot 14 in FIG. 3, which belongs to the ring finger and proximal interphalangeal joint), ring finger distal interphalangeal joint point (dot 15 in FIG. 3, which belongs to the ring finger and distal interphalangeal joint), ring finger tip (dot 16 in FIG. 3, which belongs to the distal phalanx of the ring finger), little finger metacarpophalangeal joint point (dot 17 in FIG. 3, which belongs to the little finger and metacarpophalangeal joint), little finger proximal interphalangeal joint point (dot 18 in FIG. 3, which belongs to the little finger and proximal interphalangeal joint), little finger distal interphalangeal joint point (dot 19 in FIG. 3, which belongs to the little finger and distal interphalangeal joint), and little finger tip (dot 20 in FIG. 3, which belongs to the distal phalanx of the little finger).

The bones of the palm can be divided into extra-finger bones and intra-finger bones. The intra-finger bones include the proximal phalanges, middle phalanges, and distal phalanges (for the thumb, only the proximal and distal phalanges), and the extra-finger bones include the carpal bones and metacarpal bones.

The joints of the palm can be divided into the extra-finger joint and intra-finger joints. The intra-finger joint refers to the joints inside the fingers, which allow the bending and extension of the fingers. For the thumb, intra-finger joints include the metacarpophalangeal joint and the interphalangeal joint. For any of the index finger, middle finger, ring finger, and little finger, intra-finger joints include the metacarpophalangeal joint, proximal interphalangeal joint, and distal interphalangeal joint. The extra-finger joint includes the carpometacarpal joint.

For example, a terminal can obtain bone point information for each of palm bone points in a target palm image, the bone point information including a position and a bone point type of the respective palm bone point, and determine a plurality of palm bone point groups from the palm bone points based on the bone point type of the respective palm bone point, each palm bone point group corresponding to at least one geometric processing type. The terminal can perform following steps to each of the palm bone point groups: generating at least one auxiliary line based on the positions of the palm bone points in the respective palm bone point group according to the corresponding geometric processing type; and determining at least one palm contour point on the generated at least one auxiliary line based on the positions of the palm bone points in the respective palm bone point group and a reference step length, to obtain a position of each of the determined at least one palm contour point corresponding to the respective palm bone point group. The terminal can generate the palm contour based on the position of each of the determined at least one palm contour point corresponding to the respective palm bone point group.

The terminal can display the palm contour which is extracted based on the target palm image, and generate an object control instruction based on display information of the palm contour.

The terminal and the server may also be configured to collaboratively perform the method for extracting a palm contour and the method for generating an instruction for controlling an object provided in the embodiments of this application.

For example, a server can obtain, from a terminal, bone point information for each of palm bone points in a target palm image, the bone point information including a position and a bone point type of the respective palm bone point, and determine a plurality of palm bone point groups from the palm bone points based on the bone point type of the respective palm bone point, each palm bone point group corresponding to at least one geometric processing type. The server can perform following steps to each of the palm bone point groups: generating at least one auxiliary line based on the positions of the palm bone points in the respective palm bone point group according to the corresponding geometric processing type; and determining at least one palm contour point on the generated at least one auxiliary line based on the positions of the palm bone points in the respective palm bone point group and a reference step length, to obtain a position of each of the determined at least one palm contour point corresponding to the respective palm bone point group. The server can generate the palm contour based on the position of each of the determined at least one palm contour point corresponding to the respective palm bone point group.

The terminal can obtain the palm contour which is extracted based on the target palm image from the server, display the palm contour, and generate an object control instruction based on display information of the palm contour.

In the foregoing method for extracting a palm contour, there is no need to perform complex data processing on pixel information of the palm image, and geometry processing is performed based on the bone point information for each of the palm bone points in the palm image, so that the positions of the palm contour points can be conveniently determined from the palm image, to generate the palm contour based on the positions of the palm contour points. Positions and bone point types of the palm bone points are not susceptible to interference from image backgrounds. Extracting the palm contour based on the positions and the bone point types of the palm bone points in the palm image can effectively improve extraction accuracy of the palm contour.

In the foregoing method for generating an instruction for controlling an object, the positions of the palm contour points are determined by performing geometry processing based on the bone point information for each of the palm bone points in the palm image, and the palm contour is generated based on the positions of the palm contour points. The palm contour can be extracted without the need to perform complex data processing on pixel information of the palm image, and has high extraction accuracy for being not susceptible to interference from image backgrounds. Extracting an accurate palm contour is also helpful to ensure accurate display, and further helpful to improve generation accuracy of the object control instruction. The object control instruction can be automatically generated based on the display information of the palm contour, which can also improve the generation efficiency of the object control instruction.

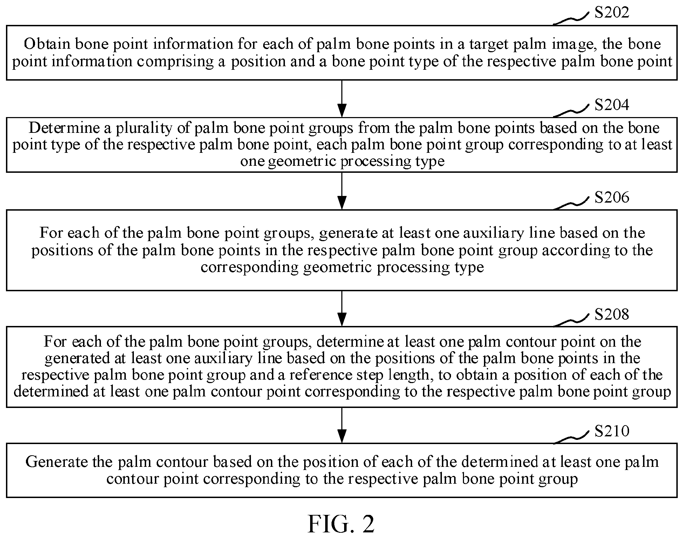

In an embodiment, as shown in FIG. 2, a method for extracting a palm contour is provided. An example in which the method is applied to a computer device is used for description. The computer device may be the terminal 102 or the server 104 in FIG. 1. Referring to FIG. 2, the method for extracting a palm contour includes the following operations.

S202: Obtain bone point information for each of palm bone points in a target palm image, the bone point information including a position and a bone point type of the respective palm bone point.

The target palm image is a palm image from which a palm contour is to be extracted. The palm image is an image including a palm. The palm image may include only a palm. For example, the palm image is an image obtained by capturing a palm region. The palm image may also include more body parts. For example, the palm image is obtained by capturing a half body of an object with a palm raised. The palm image may be captured in real time. For example, a palm photo captured in real time is used as the palm image; and a video frame including a palm in a video captured in real time is used as the palm image. The palm image may also be obtained from pre-captured data. For example, a palm photo stored in a photo album is used as the palm image; and a video frame including a palm in a pre-edited video is used as the palm image. In addition, the palm image may be obtained by capturing a real palm, or may be obtained by capturing a virtual palm.

The palm bone point is a bone point in a palm. The palm includes a plurality of palm bone points. Palm bone point recognition is performed on the palm image, to obtain bone point information for each of the palm bone points in the palm image. The bone point information includes a position and a bone point type of the respective palm bone point. The position of a palm bone point represents the position of the palm bone point in the palm image, and the bone point types are used for identifying types of the palm bone points.

Specifically, the computer device may obtain the target palm image locally or from another device, and perform palm bone point recognition on the target palm image in real time to obtain the bone point information for each of the palm bone points in the target palm image, or may directly obtain pre-recognized bone point information for each of the palm bone points in the target palm image locally or from another device. Further, the computer device may perform palm contour recognition on the target palm image based on the bone point information for each of the palm bone points, to obtain the palm contour in the target palm image.

S204: Determine a plurality of palm bone point groups from the palm bone points based on the bone point type of the respective palm bone point, each palm bone point group corresponding to at least one geometry processing type.

In all embodiments of the present disclosure, each palm bone point group can include at least two palm bone points. The geometry processing type is used for determining a geometry processing manner corresponding to the palm bone point group. Geometry processing is performed on the palm bone point group in the geometry processing manner corresponding to the palm bone point group, to obtain palm contour points corresponding to the palm bone point group. One palm bone point group may correspond to at least one geometry processing type.

Specifically, the computer device may match the palm bone points based on the bone point types, form successfully matched palm bone points into a palm bone point group, and finally obtain a plurality of palm bone point groups. Each palm bone point group corresponds to at least one geometry processing type.

The computer device may determine palm bone points whose bone point types meet one of preset conditions as a palm bone point group, and finally obtain a plurality of palm bone point groups. The palm bone point groups determined based on different preset conditions correspond to different geometry processing types. Each palm bone point group may correspond to at least one geometry processing type. The preset conditions will be explained in detail below.

In an embodiment, the computer device can obtain a pre-established correspondence between the preset conditions and the geometry processing types. After determining a palm bone point group based on a preset condition, at least one geometry processing type corresponding to the palm bone point group can be determined based on the correspondence to be the at least one geometry processing type corresponding to the preset condition.

In an embodiment, the pre-established correspondence between the preset conditions and the geometry processing types can be obtained. After determining all palm bone point groups corresponding to all preset conditions, at least one geometry processing type corresponding to each palm bone point group can be determined based on the correspondence to be the at least one geometry processing type corresponding to the respective preset condition.

In an embodiment, after determining a palm bone point group based on a preset condition, at least one geometry processing type corresponding to the preset condition can be obtained based on the pre-established correspondence between the preset conditions and the geometry processing types, and then at least one geometry processing type corresponding to the palm bone point group can be determined to be the at least one geometry processing type.

In an embodiment, after determining the respective palm bone point group based on each preset condition, a geometry processing type corresponding to each of the preset conditions is obtained based on the pre-established correspondence between preset conditions and geometry processing types, and the geometry processing type corresponding to each palm bone point group is determined to be the respective geometry processing type.

In an embodiment, the computer device may obtain bone point type matching information. The bone point type matching information records matching relationships between the bone point types of the palm bone points. Based on the bone point type matching information, the computer device may quickly match the palm bone points based on the bone point types, to quickly obtain palm bone point groups. In an embodiment, the bone point type matching information may further include geometry processing types respectively corresponding to the matching relationships, so that when a palm bone point group is determined based on one matching relationship, the at least one geometry processing type corresponding to the palm bone point group may be synchronously determined.

In an embodiment, the geometry processing type corresponding to the palm bone point group may be determined based on the bone point types of the palm bone points in the palm bone point group. For example, at least one target palm bone point type corresponding to each geometry processing type is preset. If the palm bone point group includes a target palm bone type, the geometry processing type corresponding to the target palm bone point type is used as the geometry processing type corresponding to the palm bone point group.

In an embodiment, the at least one geometry processing type corresponding to the palm bone point group may be determined based on the positions of the palm bone points in the palm bone point group. For example, a palm part in the palm image can be divided into a plurality of palm regions, each palm region corresponds to at least one geometry processing type, and the at least one geometry processing type corresponding to the palm region into which the palm bone point group falls is used as the at least one geometry processing type corresponding to the palm bone point group.

In an embodiment, there are connection relationships between the palm bone points. When the palm bone points are recognized, the connection relationships between the palm bone points and the bone point information of the palm bone points may be synchronously recognized. The computer device may first perform preliminary matching on the palm bone points based on the connection relationships to obtain a plurality of first palm bone point groups, then perform complementary matching on the palm bone points based on the bone point types to obtain a plurality of second palm bone point groups, and finally obtain the plurality of palm bone point groups based on the first palm bone point groups and the second palm bone point groups.

For example, referring to FIG. 3, dots in FIG. 3 represent palm bone points, including a total of 21 palm bone points, and connection lines between the dots in FIG. 3 represent the connection relationships between the palm bone points. The computer device may form adjacent palm bone points having the connection relationship into first palm bone point groups. For example, dot 0 and dot 1 are formed into a first palm bone point group, and dot 1 and dot 2 are formed into a first palm bone point group. The computer device may form the palm bone points corresponding to a preset bone point type into a second palm bone point group. For example, if the bone point type corresponding to dot 13 and dot 17 is the preset bone point type, dot 13 and dot 17 may be formed into a second palm bone point group.

S206:For each of the palm bone point groups, generate at least one auxiliary line based on the positions of the palm bone points in the respective palm bone point group according to the corresponding geometric processing type.

In all embodiments of the present disclosure, the auxiliary line can be a geometric line used to determine the palm contour point.

Specifically, after the plurality of palm bone point groups are determined, for any of the palm bone point groups, the computer device may generate, based on the positions of the palm bone points in the palm bone point group, the at least one auxiliary line according to the geometry processing type. The computer device may determine a geometry processing manner and a geometry processing algorithm based on the geometry processing type corresponding to the palm bone point group, and perform data processing on the positions of the palm bone points in the palm bone point group through the geometry processing algorithm, to generate the at least one auxiliary line corresponding to the palm bone point group. Finally, the computer device may obtain the auxiliary lines respectively corresponding to the palm bone point groups.

In all embodiments of the present disclosure, one palm bone point group may correspond to at least one auxiliary line.

S208:For each of the palm bone point groups, determine at least one palm contour point on the generated at least one auxiliary line based on the positions of the palm bone points in the respective palm bone point group and a reference step length, to obtain a position of each of the determined at least one palm contour point corresponding to the respective palm bone point group.

In all embodiments of the present disclosure, the reference step length can be a step length for moving along the auxiliary line. Each palm bone point group corresponds to a reference step length.

Specifically, for any of the palm bone point groups, the computer device may determine at least one palm contour point on the generated at least one auxiliary line corresponding to the palm bone point group based on the positions of the palm bone points in the palm bone point group and the reference step length corresponding to the palm bone point group, to obtain a position of each of the determined at least one palm contour point corresponding to the respective palm bone point group. The computer device may determine a movement start point on a generated auxiliary line corresponding to the palm bone point group based on the positions of the palm bone points in the palm bone point group, move the reference step length from the movement start point on the auxiliary line, and use a movement end point obtained by moving the reference step length as a palm contour point. Finally, the computer device may obtain a plurality of palm contour points and the position of each of the plurality of palm contour points.

In all embodiments of the present disclosure, a palm image with a marked palm contour may be obtained as a reference palm image, and a general reference step length is determined based on the reference palm image. Specifically, an auxiliary line corresponding to the reference palm image is determined based on the reference palm image, and an intersection point between the auxiliary line and the marked palm contour is used as a reference contour point. The reference contour point is an accurate palm contour point, an accurate movement step length is determined based on a distance between the movement start point and the reference contour point, and the accurate movement step length is used as the reference step length. The computer device may obtain a plurality of reference palm images, and records different reference step lengths determined based on different reference palm images to obtain the general reference step length. For example, an average value of the reference step lengths may be calculated as the general reference step length. Subsequently, when a palm image for which the palm contour is unknown is processed, the general reference step length may be directly obtained to determine the palm contour point in the palm image, or the general reference step length may be fine-tuned based on personalization information of the palm image to obtain a target reference step length, and the palm contour point in the palm image is determined based on the target reference step length. The personalization information of the palm image includes at least one of the data on palm size and palm depth.

In all embodiments of the present disclosure, the reference step length can increase as the palm size corresponding to the target palm image increases. The palm size represents a size of the palm in the target palm image. For a larger palm, a longer reference step length needs to be moved on the auxiliary line to reach the accurate palm contour point. In all embodiments of the present disclosure, the palm size can include at least one of palm length or palm width.

In all embodiments of the present disclosure, the reference step length can increase as the palm depth corresponding to the target palm image decreases. The palm depth represents a distance between the palm and an image collection device. When the distance is shorter, the palm depth is smaller, and when the distance is farther, the palm depth is larger. Smaller palm depth corresponding to the target palm image can lead to a smaller distance between the palm and the image collection device and a larger palm region presented in the target palm image. For a larger palm region, a longer reference step length needs to be moved on the auxiliary line to reach the accurate palm contour point. In all embodiments of the present disclosure, the target palm image may be a depth map, and each pixel value of the depth map represents a distance between a point in a scene and the image collection device.

S208: Generate the palm contour based on the position of each of the determined at least one palm contour point corresponding to the respective palm bone point group.

Specifically, after determining the position of each of the palm contour points, the computer device may connect the positions of the palm contour points, to obtain the palm contour corresponding to the target palm image.

In the foregoing method for extracting a palm contour, bone point information for each of palm bone points in a target palm image is obtained, the bone point information including a position and a bone point type of the respective palm bone point; a plurality of palm bone point groups are determined from the palm bone points based on the bone point type of the respective palm bone point, each palm bone point group corresponds to at least one geometric processing type; the following steps are performed to each of the palm bone point groups: generating at least one auxiliary line based on the positions of the palm bone points in the respective palm bone point group according to the corresponding geometric processing type, and determining at least one palm contour point on the generated at least one auxiliary line based on the positions of the palm bone points in the respective palm bone point group and a reference step length, to obtain a position of each of the determined at least one palm contour point corresponding to the respective palm bone point group; and the palm contour corresponding to the target palm image is generated based on the position of each of the determined at least one palm contour point corresponding to the respective palm bone point group. In this way, there is no need to perform complex data processing on pixel information of the palm image, and geometry processing is performed based on the bone point information for the palm bone points in the palm image, so that the positions of the palm contour points can be conveniently determined from the palm image, to generate the palm contour based on the positions of the palm contour points. Positions and bone point types of the palm bone points are not susceptible to interference from image backgrounds. Extracting the palm contour based on the positions and the bone point types of the palm bone points in the palm image can effectively improve extraction accuracy of the palm contour.

In all embodiments of the present disclosure, the bone point type can be determined by a finger parameter and an intra-finger joint parameter. The determining a plurality of palm bone point groups from the palm bone points based on the bone point type of the respective palm bone point includes:
determining a first palm bone point group corresponding to a first geometry processing type, the first palm bone point group including adjacent palm bone points whose intra-finger joint parameter is a preset joint parameter; determining a second palm bone point group corresponding to a second geometry processing type, the second palm bone point group including adjacent palm bone points with the same finger parameter; and determining a third palm bone point group corresponding to a third geometry processing type, the third palm bone point group including a palm bone point with a preset bone point type and a palm bone point closest to the palm bone point with the preset bone point type.

The bone point type can be determined by a finger parameter and an intra-finger joint parameter. The finger parameter represents a finger to which the palm bone point belongs. The palm bone points on different fingers may be distinguished based on the finger parameter. The intra-finger joint parameter represents a joint to which the palm bone point belongs in a finger. Different palm bone points on the same finger may be distinguished based on the intra-finger joint parameter.

In all embodiments of the present disclosure, the preset joint parameter can bea preset specific intra-finger joint parameter. The preset bone point type can be a preset specific bone point type. The preset joint parameter and the preset bone point type may be set according to actual requirements. The adjacent palm bone points can be two palm bone points adjacent in position.

Specifically, when determining the plurality of palm bone point groups, the computer device may obtain adjacent palm bone points with the intra-finger joint parameter being the preset joint parameter from the palm bone points, and obtain the first palm bone point groups corresponding to the first geometry processing type. For example, referring to FIG. 3, intra-finger joint parameters for dot 13, dot 17, dot 9, and dot 5 are metacarpodigital joints, that is, dot 13, dot 17, dot 9, and dot 5 are metacarpodigital joints corresponding to different fingers. If the preset joint parameter is the metacarpodigital joint, a palm bone point group A1 which includes the adjacent dot 13 and dot 17and corresponds to the first geometry processing type can be obtained, a palm bone point group A2which includes the adjacent dot 13 and dot 9and corresponds to the first geometry processing type can be obtained, and a palm bone point group A3 which includes the adjacent dot 9 and dot 5and corresponds to the first geometry processing type can be obtained.

When determining the plurality of palm bone point groups, the computer device may obtain adjacent palm bone points with the same finger parameter from the palm bone points, and obtain the second palm bone point groups corresponding to the second geometry processing type. For example, referring to FIG. 3, the finger parameter for dot 1, dot 2, dot 3, and dot 4 is the thumb, that is, dot 1, dot 2, dot 3, and dot 4 are different joints on the same finger, a palm bone point group B1 which includes the adjacent dot 1 and dot 2 and corresponds to the second geometry processing type can be obtained, a palm bone point group B2 which includes the adjacent dot 2 and dot 3 and corresponds to the second geometry processing type can be obtained, and a palm bone point group B3 which includes the adjacent dot 3 and dot 4 and corresponds to the second geometry processing type can be obtained.

When determining the plurality of palm bone point groups, the computer device may obtain a palm bone point with the preset bone point type from the palm bone points as the preset bone point, obtain a palm bone point closest to the preset bone point, and obtain the third palm bone point group corresponding to the third geometry processing type. For example, referring to FIG. 3, if the bone point type for dot 0 is the preset bone point type, dot 0 is the preset bone point, and dot 1 is the palm bone point closest to dot 0, a palm bone point group C which includes dot 1 and dot 0 and corresponds to the third geometry processing type can be obtained.

In the foregoing embodiments, a first palm bone point group corresponding to a first geometry processing type is determined, the first palm bone point group includes adjacent palm bone points whose intra-finger joint parameter is a preset joint parameter; a second palm bone point group corresponding to a second geometry processing type is determined, the second palm bone point group includes adjacent palm bone points with the same finger parameter; and a third palm bone point group corresponding to a third geometry processing type is determined, the third palm bone point group includes a palm bone point with a preset bone point type and a palm bone point closest to the palm bone point with the preset bone point type. The bone point type can be determined by the finger parameter and the intra-finger joint parameter, and the palm bone point groups may be quickly obtained based on the bone point type of the respective palm bone point.

In all embodiments of the present disclosure, the first geometry processing type can be used for determining palm contour points on an interdigit and a palm outer contour. The second geometry processing type can be used for determining a palm contour point on a finger contour edge. The third geometry processing type can be used for determining palm contour points on the finger contour edge and the palm outer contour.

In all embodiments of the present disclosure, the generating at least one auxiliary line based on the positions of the palm bone points in the respective palm bone point group according to the corresponding geometric processing type includes:
determining at least one auxiliary line type based on the respective geometry processing type corresponding to the respective palm bone point group; generating a bone point line segment corresponding to the respective palm bone point group based on the position of the respective palm bone point in the respective palm bone point group; and performing geometry processing on the bone point line segment based on the respective auxiliary line type, to obtain the at least one auxiliary line corresponding to the respective palm bone point group.

The auxiliary line type is a type of the auxiliary line corresponding to the palm bone point group. The bone point line segment is a line segment formed by the palm bone points in the palm bone point group. Geometry processing is used for generating the specific type of auxiliary line based on the bone point line segment.

Specifically, when generating the at least one auxiliary line, the computer device may first determine the at least one auxiliary line type for the at least one auxiliary line, and then generate the corresponding at least one auxiliary line. The computer device may determine the at least one auxiliary line type based on the respective geometry processing type corresponding to the respective palm bone point group, where each geometry processing type corresponds to at least one auxiliary line type. The computer device may generate a bone point line segment corresponding to the respective palm bone point group based on the position of the respective palm bone point in the respective palm bone point group. For example, a line segment can be determined by two points, two palm bone points may be obtained from a palm bone point group, and the positions of the two palm bone points are connected to generate the bone point line segment. A sequential order of determining the at least one auxiliary line type and generating the bone point line segment is not limited in this application. Finally, the computer device may perform geometry processing on the bone point line segment based on the respective auxiliary line type, thereby obtaining the at least one auxiliary line. For example, if the auxiliary line type is an extension line, an extension line of the bone point line segment may be used as the auxiliary line.

In the foregoing embodiments, at least one auxiliary line type based on the respective geometry processing type corresponding to the respective palm bone point group is determined, a bone point line segment corresponding to the respective palm bone point group based on the position of the respective palm bone point in the respective palm bone point group is generated, and geometry processing on the bone point line segment based on the respective auxiliary line type is performed, to obtain the at least one auxiliary line corresponding to the respective palm bone point group. The auxiliary line type can be first determined, and then geometry processing can be performed on the bone point line segment generated based on the respective auxiliary line type, to quickly generate the corresponding auxiliary line.

In all embodiments of the present disclosure, the geometry processing type can include any one of a first geometry processing type, a second geometry processing type, or a third geometry processing type, an auxiliary line type corresponding to the first geometry processing type can include at least one of a mid-perpendicular line type or an extension line type, an auxiliary line type corresponding to the second geometry processing type can include a normal line type, and an auxiliary line type corresponding to the third geometry processing type can include at least one of a normal line type or an extension line type.

The geometry processing type includes any one of the first geometry processing type, the second geometry processing type, or the third geometry processing type. The auxiliary line type corresponding to the first geometry processing type includes at least one of a mid-perpendicular line type or an extension line type. The auxiliary line corresponding to the mid-perpendicular line type is a mid-perpendicular line. The mid-perpendicular line is a straight line passing through a midpoint of a line segment and perpendicular to the line segment. The auxiliary line corresponding to the extension line type is an extension line. The extension line is a straight line obtained by continuing to extend from an endpoint based on a line segment. The auxiliary line type corresponding to the second geometry processing type includes a normal line type. The auxiliary line corresponding to the normal line type is a normal line. A normal line of the line segment may also be referred to as a vertical line of the line segment, and the line segment and the corresponding normal line are perpendicular to each other. The auxiliary line type corresponding to the third geometry processing type includes at least one of a normal line type or an extension line type.

In the foregoing embodiments, different geometry processing types correspond to different auxiliary line types, and one geometry processing type may correspond to at least one auxiliary line type, which can effectively increase the number of palm contour points, thereby improving extraction accuracy of the palm contour.

In all embodiments of the present disclosure, the performing geometry processing on the bone point line segment based on the respective auxiliary line type, to obtain the at least one auxiliary line corresponding to the respective palm bone point group includes:

when the respective auxiliary line type is a mid-perpendicular line type, using a mid-perpendicular line of the bone point line segment as the auxiliary line; when the respective auxiliary line type is an extension line type, determining a target bone point from the palm bone points in the respective palm bone point group, and using an extension line that corresponds to the bone point line segment and starts at the target bone point as the auxiliary line; and when the respective auxiliary line type is a normal line type, determining the target bone point from the palm bone points in the respective palm bone point group, and using a normal line of the bone point line segment at the target bone point as the auxiliary line.

Specifically, if the respective auxiliary line type is the mid-perpendicular line type, the computer device may use the mid-perpendicular line of the bone point line segment as the auxiliary line.

If the respective auxiliary line type is the extension line type, the computer device may select a palm bone point from the palm bone points in the corresponding palm bone point group as the target bone point, and use an extension line that corresponds to the bone point line segment and starts at the target bone point as the auxiliary line. When determining the target bone point, the computer device may use a palm bone point closer to the center of the palm as the target bone point, or may use a palm bone point with a specified bone point type in the palm bone point group as the target bone point, or may respectively use each of the palm bone points in the palm bone point group as the target bone point.

If the respective auxiliary line type is the normal line type, the computer device may select a palm bone point from the palm bone points in the corresponding palm bone point group as the target bone point, and use a normal line of the bone point line segment at the target bone point as the auxiliary line. When determining the target bone point, the computer device may respectively use each of the palm bone points in the palm bone point group as the target bone point, thereby generating a plurality of auxiliary lines, or may select a palm bone point in the palm bone point group as the target bone point, thereby generating an auxiliary line. The palm bone point may be randomly selected, or a palm bone point closer to a fingertip may be selected.

In the foregoing embodiments, when the respective auxiliary line type is the mid-perpendicular line type, the mid-perpendicular line of the bone point line segment can be used as the auxiliary line; when the respective auxiliary line type is the extension line type, the target bone point can be determined from the palm bone points in the palm bone point group, and the extension line that corresponds to the bone point line segment and starts at the target bone point can be used as the auxiliary line; and when the respective auxiliary line type is the normal line type, the target bone point can be determined from the palm bone points in the palm bone point group, and the normal line of the bone point line segment at the target bone point can be used as the auxiliary line. For different auxiliary line types, different geometric methods may be used to quickly generate the corresponding auxiliary lines.

In all embodiments of the present disclosure, the determining at least one palm contour point on the generated at least one auxiliary line based on the positions of the palm bone points in the respective palm bone point group and a reference step length, to obtain a position of each of the determined at least one palm contour point corresponding to the respective palm bone point group includes:

generating, based on the position of the respective palm bone point in the respective palm bone point group, a bone point line segment corresponding to the respective palm bone point group; determining a reference point on the bone point line segment; and moving on the generated respective auxiliary line, starting from the reference point, in a movement direction corresponding to the respective auxiliary line, by the reference step length corresponding to the respective palm bone point group, to obtain a palm contour point and a position of the obtained palm contour point.

The generated respective auxiliary line can be an auxiliary line corresponding to the palm bone point group.

Specifically, when determining the palm contour point, the computer device may determine the reference point from the bone point line segment, move on the generated respective auxiliary line, starting from the reference point, in a movement direction corresponding to the respective auxiliary line, by the reference step length, and use a movement end point as the palm contour point. First, the computer device may generate the bone point line segment corresponding to the respective palm bone point group based on the position of the respective palm bone point in the respective palm bone point group. Next, the computer device may determine the reference point from the bone point line segment. For example, any endpoint of the bone point line segment may be used as the reference point, or an intersection point between the bone point line segment and the respective auxiliary line may be used as the reference point. Then, starting from the reference point, the computer device may move on the generated respective auxiliary line, in a movement direction corresponding to the auxiliary line, by the reference step length corresponding to the respective palm bone point group, thereby determining the palm contour point and the position of the palm contour point. Each of the auxiliary lines of different types corresponds to a movement direction, and the auxiliary lines of the same type correspond to at least one movement direction.

In all embodiments of the present disclosure, the reference step length increases as a length of the bone point line segment increases. The length of the bone point line segment may reflect the personalization information of the palm. A longer length of the line segment indicates a larger palm. For a larger palm, a longer reference step length needs to be moved on the auxiliary line to reach the accurate palm contour point.

In the foregoing embodiments, based on the position of the respective palm bone point in the respective palm bone point group, a bone point line segment corresponding to the respective palm bone point group can be generated; a reference point on the bone point line segment can be determined; and starting from the reference point, in a movement direction corresponding to the respective auxiliary line, the reference step length corresponding to the respective palm bone point group can be moved on the generated respective auxiliary line, to obtain a palm contour point and the position of the palm contour point. In this way, with the reference point determined according to the palm bone points as the start point, the corresponding reference step length is moved on the respective auxiliary line according to the movement direction corresponding to the auxiliary line, so that an accurate palm contour point can be quickly obtained.

In all embodiments of the present disclosure, the respective auxiliary line can include at least one of a mid-perpendicular line, an extension line, or a normal line, a movement direction corresponding to the mid-perpendicular line can be a direction away from the center of a palm, a movement direction corresponding to the extension line can be an extension direction of the bone point line segment, and a movement direction corresponding to the normal line can be a direction perpendicular to the bone point line segment.

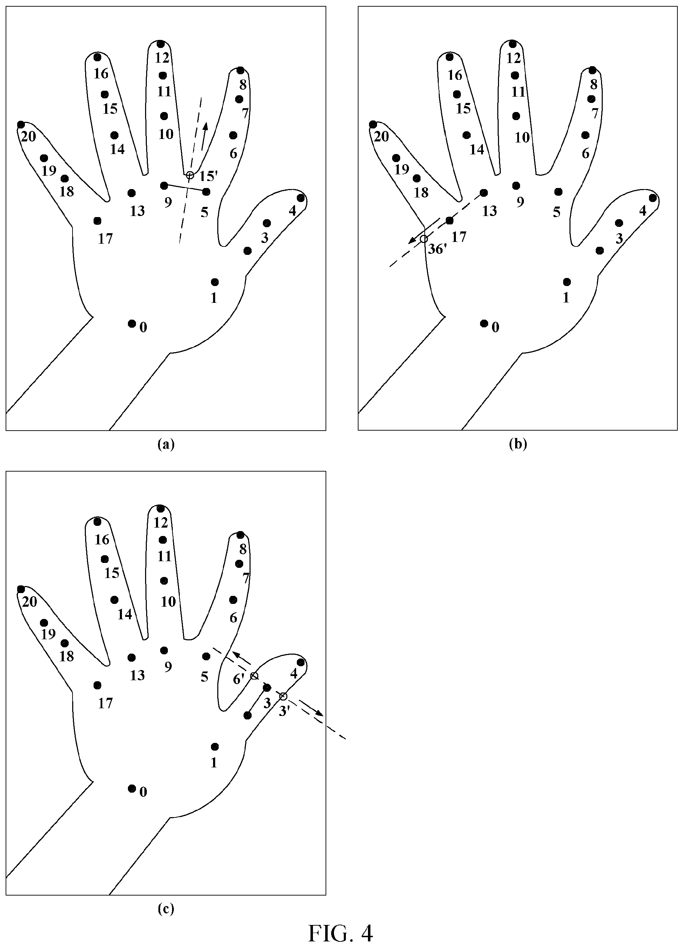

The movement direction corresponding to the mid-perpendicular line can be a direction away from the center of the palm. That is, the palm contour point needs to be determined by moving the reference step length on the auxiliary line of the mid-perpendicular line type, in the direction away from the center of the palm. For example, referring to (a) in FIG. 4, a dashed line in (a) represents a mid-perpendicular line, an arrow represents a direction away from the center of the palm, and dot 15' represents a palm contour point determined by moving the reference step length on the mid-perpendicular line in the direction away from the center of the palm.

The movement direction corresponding to the extension line can be the extension direction of the bone point line segment. That is, the palm contour point needs to be determined by moving the reference step length on the auxiliary line of the extension line type in the extension direction of the bone point line segment. For example, referring to (b) in FIG. 4, a dashed line in (b) represents an extension line, an arrow represents an extension direction of the bone point line segment, and dot 36' represents a palm contour point determined by moving the reference step length on the extension line according to the extension direction of the bone point line segment.

The movement direction corresponding to the normal line can be the direction perpendicular to the bone point line segment. That is, the palm contour point needs to be determined by moving the reference step length on the auxiliary line of the normal line type in the direction perpendicular to the bone point line segment. For example, referring to (c) in FIG. 4, a dashed line in (c) represents a normal line, an arrow represents a direction perpendicular to the bone point line segment, i.e., a direction of the normal line, and dot 3'and dot 6' represent palm contour points determined by moving the reference step length on the normal line according to the direction perpendicular to the bone point line segment.

In the foregoing embodiments, the movement direction corresponding to the mid-perpendicular line can be the direction away from the center of the palm, the movement direction corresponding to the extension line can be the extension direction of the bone point line segment, and the movement direction corresponding to the normal line can be the direction perpendicular to the bone point line segment. The auxiliary lines of different types correspond to different movement directions.

In all embodiments of the present disclosure, each of the palm bone points can have a corresponding identifier. The generating the palm contour based on the position of each of the determined at least one palm contour point corresponding to the respective palm bone point group includes:
determining, based on the identifiers of the palm bone points in the respective palm bone point group and preset mapping information, an identifier of each of the determined at least one palm contour point corresponding to the respective palm bone point group for indicating a sorting order of the respective palm contour point, wherein the preset mapping information can include an mapping relationship between the identifiers of the palm bone points in the respective palm bone point group and the identifier of each of the at least one palm contour point determined based on the respective palm bone point group; and connecting the positions of the palm contour points in the order as indicated by the identifiers of the palm contour points, to obtain the palm contour corresponding to the target palm image.

The identifier of a palm bone point can be used for uniquely identifying the palm bone point. The identifier of a palm contour point can indicate a sorting order for arranging the palm contour points.

The preset mapping information can record an mapping relationship between the identifiers of the palm bone points in the respective palm bone point group and the identifier of each of the at least one palm contour point determined based on the respective palm bone point group. For example, a palm contour point generated based on palm bone point 0 and palm bone point 1 can be marked as 1', and palm contour points generated based on palm bone point 1 and palm bone point 2 can be marked as 2' and 7'.

Specifically, when generating the palm contour based on the position of each of the determined palm contour points, the palm contour points may be connected in order to obtain the palm contour. To determine the sorting information of the palm contour points, the computer device may obtain the preset mapping information, determine an identifier of each of the determined at least one palm contour point corresponding to the respective palm bone point group based on the identifiers of the palm bone points in the respective palm bone point group and preset mapping information, and finally obtain the identifier of each of the palm contour points. Further, the computer device may connect the positions of the palm contour points in the order as indicated by the identifiers of the palm contour points, to obtain a correct palm contour.

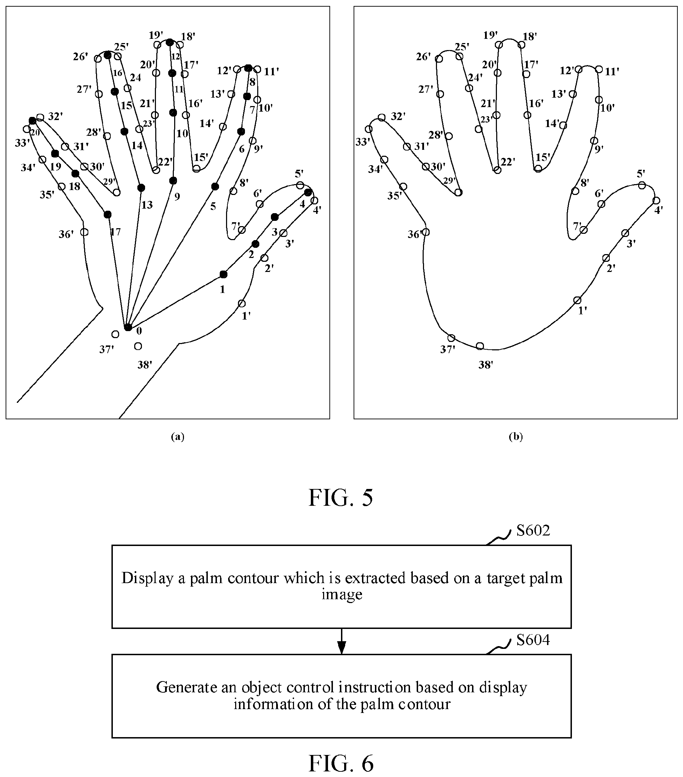

For example, referring to FIG. 5, black dots in FIG. 5 represent palm bone points, and white dots represent palm contour points. (a) in FIG. 5 represents a target palm image. Palm contour points 1' to 38' may be obtained based on palm bone points 0 to 20. (b) in FIG. 5 represents a palm contour. The palm contour may be obtained by connecting the palm contour points 1' to 38' in order.

In all embodiments of the present disclosure, the positions of the palm contour points may be smoothly connected or straightly connected.

In the foregoing embodiments, an identifier of each of the determined at least one palm contour point corresponding to the respective palm bone point group for indicating a sorting order of the respective palm contour point can be determined based on the identifiers of the palm bone points in the respective palm bone point group and preset mapping information, wherein the preset mapping information can include an mapping relationship between the identifiers of the palm bone points in the respective palm bone point group and the identifier of each of the at least one palm contour point determined based on the respective palm bone point group; and the positions of the palm contour points can be connected in the order as indicated by the identifiers of the palm contour points, to obtain the palm contour corresponding to the target palm image. In this way, the sorting identifiers of the palm contour points can be quickly determined through the preset mapping information, so that the palm contour points can be connected in order based on the identifiers of the palm contour points to generate an accurate palm contour.

In all embodiments of the present disclosure, the obtaining the bone point information for each of palm bone points in the target palm image includes:
inputting the target palm image into a target recognition model that has been trained to recognize bone point information, to obtain the bone point information for each of the palm bone points.

The target recognition model can be a trained palm bone point recognition model. Input data of the palm bone point recognition model can be a palm image, and output data thereof can be the bone point information for each of the palm bone points in the palm image.

Specifically, the computer device may recognize the palm bone points based on a machine learning model. The computer device may obtain a pre-trained target recognition model and input the target palm image into the target recognition model, and through data processing of the model, the model may finally output the bone point information for each of the palm bone points.

In all embodiments of the present disclosure, a training process of the target recognition model can include the following operations: obtaining a training data set, where the training data set includes a plurality of training palm images and training bone point information for each of the training palm images; selecting a current training palm image from the training data set; inputting the current palm image into an initial recognition model for predicting bone point information, to obtain predicted bone point information for the current training palm image; adjusting a model parameter of the initial recognition model based on a difference between the predicted bone point information and the training bone point information for the current training palm image, to obtain an intermediate recognition model; and using a next training palm image as the current palm image, using the intermediate recognition model as the initial recognition model, and going back to perform the operation of inputting the current palm image into the initial recognition model until a convergence condition is met, to obtain the target recognition model.

The initial recognition model can be a to-be-trained palm bone point recognition model. The training palm image can be a palm image of which the bone point information is known. The current palm image can be any of the palm images in the training data set. The training bone point information can be accurate bone point information. The predicted bone point information is bone point information predicted by the model.

Specifically, during model training, the computer device may obtain the training data set, and perform model training on the initial recognition model based on the training data set, to obtain the target recognition model. A target training image in the training data set can be used as the input data of the palm bone point recognition model, and the training bone point information can be used as expected output data of the palm bone point recognition model. A training objective of the model is to make actual output data closer to the expected output data of the model, so that the model can output the predicted bone point information close to the training bone point information, to correctly recognize the palm bone points in the palm image.

The computer device may randomly select a training palm image from the training data set as the current training palm image and input the current training palm image into the initial recognition model. Through data processing of the model, the model outputs the predicted bone point information for the current training palm image. Further, the computer device may generate loss information based on the difference between the predicted bone point information and the training bone point information for the current training palm image, performs back propagation based on the loss information, and adjusts the model parameter of the initial recognition model, thereby obtaining the intermediate recognition model. The computer device may obtain a next training palm image as a new current training palm image, uses the intermediate recognition model as a new initial recognition model, goes back to perform the operation of inputting the current training palm image into the initial recognition model to obtain the predicted bone point information for the current training palm image, to perform model iterative training, and continuously adjusts the model parameter through a plurality of times of model iterative training until a convergence condition is met, to obtain a target recognition model.

The convergence condition may be at least one of conditions such as the loss information being less than a preset threshold or the number of model iterations being greater than a preset number of times. For example, if in a round of training, the loss information obtained through calculation based on the difference between the predicted bone point information and the training bone point information is less than the preset threshold, adjustment of the model parameter can be stopped, and a latest recognition model obtained through adjustment can be used as the target recognition model. For example, if the number of model iterations after a round of training is greater than the preset number of times, a latest recognition model obtained through adjustment can be used as the target recognition model.

A current palm image determined in each round of training may include at least one training palm image.

In the foregoing embodiments, the palm bone points in the palm image are recognized by using the target recognition model, which can ensure recognition accuracy and recognition efficiency. Through a supervised iterative training manner, an accurate target recognition model may be obtained through training.

In all embodiments of the present disclosure, the palm contour is used for generating a palm animation.

Specifically, after the palm contour is generated, the palm animation may be generated based on the palm contour, and the palm animation is displayed.

In all embodiments of the present disclosure, the computer device may collect the palm image in real time, recognize the palm contour in the palm image in real time, and display a dynamic palm contour to form a dynamic palm animation. In all embodiments of the present disclosure, the computer device may set a display parameter of the palm contour to generate the palm animation. For example, the palm contour is displayed by using dynamically changing gradient colors. In all embodiments of the present disclosure, the computer device may set a display parameter of a closed region formed by the palm contour to generate the palm animation. For example, the closed region formed by the palm contour is displayed by using dynamically changing rainbow colors.

In the foregoing embodiments, the palm contour extracted from the palm image may be used for generating the palm animation, thereby improving fun and interactivity.

In all embodiments of the present disclosure, as shown in FIG. 6, a method for generating an instruction for controlling an object is provided. An example in which the method is applied to a terminal is used for description. The method may also be applied to a server, or may be applied to a system including a terminal and a server, and is implemented through interaction between the terminal and the server. In this embodiment, the method for generating an instruction for controlling an object includes the following operations:

S602: Display a palm contour which is extracted based on a target palm image.

An extraction process of the palm contour includes the following operations: obtaining bone point information for each of palm bone points in the target palm image, the bone point information including a position and a bone point type of the respective palm bone point; determining a plurality of palm bone point groups from the palm bone points based on the bone point type of the respective palm bone point, each palm bone point group corresponding to at least one geometric processing type; performing following steps to each of the palm bone point groups:-generating at least one auxiliary line based on the positions of the palm bone points in the respective palm bone point group according to the corresponding geometric processing type;- determining at least one palm contour point on the generated at least one auxiliary line based on the positions of the palm bone points in the respective palm bone point group and a reference step length, to obtain a position of each of the determined at least one palm contour point corresponding to the respective palm bone point group; and generating the palm contour based on the position of each of the determined at least one palm contour point corresponding to the respective palm bone point group.

For a specific extraction process of the palm contour, reference may be made to content of the embodiments of the foregoing method for extracting a palm contour. Details are not described herein again.

S604: Generate an object control instruction based on display information of the palm contour.

The display information is used to reflect a display situation of the palm contour. The display information may include data of at least one of a display position, a display size, a display depth, and a display posture.

The object control instruction is an instruction for controlling and operating an object. The controlled object may be a virtual object, for example, a virtual resource, a virtual person, or a virtual control. The controlled object may also be a physical object, for example, an electronic device or a mechanical device. The object control instruction may be a variety of control instructions. In all embodiments of the present disclosure, the object control instruction may be an instruction for enabling or disabling one or some functions of the object. For example, the object control instruction may be a light-on instruction, a light-off instruction, a test start instruction, or a test abort instruction. In all embodiments of the present disclosure, the object control instruction may be an instruction for controlling the object to move. For example, the object control instruction may be a transfer instruction for instructing the transfer of the virtual resource or a virtual person jumping instruction. In all embodiments of the present disclosure, the object control instruction may be an instruction for controlling to adjust an attribute parameter of the object. For example, the object control instruction may be a paintbrush color adjustment instruction or a window size adjustment instruction.

Specifically, the terminal may display the palm contour which is extracted based on the target palm image, and generate the object control instruction based on the display information of the palm contour. The terminal may autonomously execute the object control instruction, and control the corresponding object through the object control instruction. The terminal may alternatively transmit the object control instruction to another device, and instruct the another device through the object control instruction to control the object.

In all embodiments of the present disclosure, if the display information of the palm contour meets a preset condition, the object control instruction can be generated, and if the display information of the palm contour does not meet the preset condition, prompt information can be generated. For example, the object control instruction may be generated if a position difference between a display position of the palm contour and a target display position is less than a preset threshold, the object control instruction may be generated if a display size of the palm contour is greater than a preset size; the object control instruction may be generated if a display depth difference of the palm contour is less than a preset difference; or the like. For example, a closed region formed by the palm contour may be divided to obtain at least two sub-regions, depth average values corresponding to the sub-regions are counted, and a data difference between the depth average values is counted to obtain the display depth difference. The object control instruction may be generated if the display depth difference is less than the preset difference, it indicates that depth values corresponding to pixel points in a palm do not differ greatly and the palm is placed properly. The prompt information may prompt that the current palm is placed wrongly, or may prompt to move the palm.

In all embodiments of the present disclosure, the object control instruction corresponding to the display information may be generated based on the display information of the palm contour. For example, the corresponding object control instruction may be generated based on a display posture of the palm contour. For example, if the display posture of the palm contour is that the fingers are open, a function enable instruction is generated. If the display posture corresponding to the palm contour is that the fingers are close, a function disable instruction is generated.

In the foregoing method for generating an instruction for controlling an object, the palm contour which is extracted based on the target palm image can be displayed, and the object control instruction can be generated based on the display information of the palm contour. An extraction process of the palm contour can include the following operations: obtaining bone point information for each of palm bone points in the target palm image, the bone point information including a position and a bone point type of the respective palm bone point; determining a plurality of palm bone point groups from the palm bone points based on the bone point type of the respective palm bone point, each palm bone point group corresponding to at least one geometric processing type; performing following steps to each of the palm bone point groups: - generating at least one auxiliary line based on the positions of the palm bone points in the respective palm bone point group according to the corresponding geometric processing type;- determining at least one palm contour point on the generated at least one auxiliary line based on the positions of the palm bone points in the respective palm bone point group and a reference step length, to obtain a position of each of the determined at least one palm contour point corresponding to the respective palm bone point group; and generating the palm contour based on the position of each of the determined at least one palm contour point corresponding to the respective palm bone point group. In this way, the positions of the palm contour points are determined by performing geometry processing based on the bone point information for each of the palm bone points in the palm image, and the palm contour is generated based on the positions of the palm contour points. The palm contour can be extracted without the need to perform complex data processing on pixel information of the palm image, and has high extraction accuracy for being not susceptible to interference from image backgrounds. Extracting an accurate palm contour is also helpful to ensure accurate display, and further helpful to improve generation accuracy of the object control instruction. The object control instruction can be automatically generated based on the display information of the palm contour, which can also improve the generation efficiency of the object control instruction.

In all embodiments of the present disclosure, the generating an object control instruction based on display information of the palm contour includes:
generating the object control instruction when a position difference between a display position of the palm contour and a target display position is less than a preset threshold; and generating prompt information based on the position difference when the position difference is greater than or equal to the preset threshold, where the prompt information is configured to prompt to move the palm to reduce the position difference.

The target display position can be an expected display position. The target display position may be set according to actual requirements. The prompt information may be presented in at least one expression form of a text, a speech, a picture, or a video.

Specifically, the display information can include a display position. If the position difference between the display position of the palm contour and the target display position is less than the preset threshold, which indicates that the palm contour is displayed at the expected position and the target position, the terminal can be triggered to generate the object control instruction. If the position difference between the display position of the palm contour and the target display position is greater than or equal to the preset threshold, which indicates that the palm contour is not displayed at the expected position and the target position, the terminal may generate the prompt information based on the position difference. The prompt information can be configured to prompt to move the palm to reduce the position difference, so that the palm contour may be finally displayed at the expected position.

In all embodiments of the present disclosure, the terminal may determine the display position of the palm contour based on a spatial position of the palm. For example, if the palm is right above the image collection device, the palm contour can be displayed in the middle of a screen. If the palm is on the left of the image collection device, the palm contour can be displayed on the left of the screen. If the palm is on the right of the image collection device, the palm contour can be displayed on the right of the screen.

In the foregoing embodiments, the object control instruction is generated when the position difference between the display position of the palm contour and the target display position is less than the preset threshold; and the prompt information is generated based on the position difference when the position difference is greater than or equal to the preset threshold, where the prompt information is configured to prompt to move the palm to reduce the position difference. In this way, the object control instruction is generated only when the position difference between the display position of the palm contour and the target display position is small, which can avoid blindly generating the object control instruction, and ensure effective trigger and accurate trigger of the object control instruction. When the position difference between the display position of the palm contour and the target display position is large, the prompt information can be generated to prompt to move the palm. Correct guidance can be implemented through the prompt information, so that the palm contour can be displayed at a correct position, thereby triggering the object control instruction.

In all embodiments of the present disclosure, the target palm image is a palm image corresponding to a virtual resource transfer party, the object control instruction is a transfer instruction for instructing the transfer of the virtual resource from a resource account of the virtual resource transfer party to a target account.

The virtual resource transfer party can be a party that needs to transfer the virtual resource from the resource account. Opposed to the virtual resource transfer party can be a virtual resource receiving party. The virtual resource receiving party can be a party that receives the virtual resource. The resource account can be an account that may store the virtual resource. The virtual resource can be a resource that exists in an electronic account and can be circulated, such as a currency, a virtual red envelope, a game currency, or a virtual item. The target account can be an account that needs to receive the transferred virtual resource. The target account may be an individual account or a collective account.

Specifically, in a virtual resource transfer scenario, a terminal corresponding to the virtual resource transfer party or the virtual resource receiving party or another terminal may trigger to generate the transfer instruction based on the palm image, and the transfer instruction is used for instructing the transfer of the virtual resource from a resource account of the virtual resource transfer party to a target account.

For example, the terminal can collect a palm image corresponding to the virtual resource transfer party as the target palm image, extract a palm contour in the target palm image, and display the palm contour which is extracted based on the target palm image. When a position difference between a display position of the palm contour and a target display position is less than a preset threshold, the terminal can verify identity information of the virtual resource transfer party based on the target palm image. The transfer instruction can be generated if the verification succeeds, where the transfer instruction is used for instructing the transfer of the virtual resource from a resource account of the virtual resource transfer party to a target account, and verification failure prompt information can be generated if the verification fails. When the position difference is greater than or equal to the preset threshold, the terminal can generate prompt information based on the position difference, where the prompt information is configured to prompt to move the palm to reduce the position difference. Subsequently, after the palm is moved, if a new position difference determined by the terminal based on the new palm image is less than the preset threshold, the identity information of the virtual resource transfer party can be verified based on the new palm image, and if the verification succeeds, the transfer instruction can be generated.

In the foregoing embodiments, the palm contour extracted from the palm image may be used for triggering to generate the transfer instruction, which expands a trigger manner of the transfer instruction.

In all embodiments of the present disclosure, the foregoing method for extracting a palm contour may be applied in a palm-scanning payment scenario. Specifically, the method for extracting a palm contour is applied in the application scenario as follows:

### 1. Recognize a palm contour

### 1-1. Recognize palm bone points

Palm bone points in a palm image can be recognized based on a machine learning algorithm. The palm image can be obtained through a camera, the palm image can be inputted into a trained machine learning model, and the model can output bone point information for each of the palm bone points in the palm image. In all embodiments of the present disclosure, the machine learning model may be integrated in an SDK (Software Development Kit). The bone point information includes position coordinates of the palm bone points. The position coordinates of the palm bone points may be mapped onto two-dimensional coordinates of a screen of a current operating system through a coordinate system in the SDK, and then a palm contour can be generated through the screen coordinates. The current operating system can include an android system, a windows system, and the like.

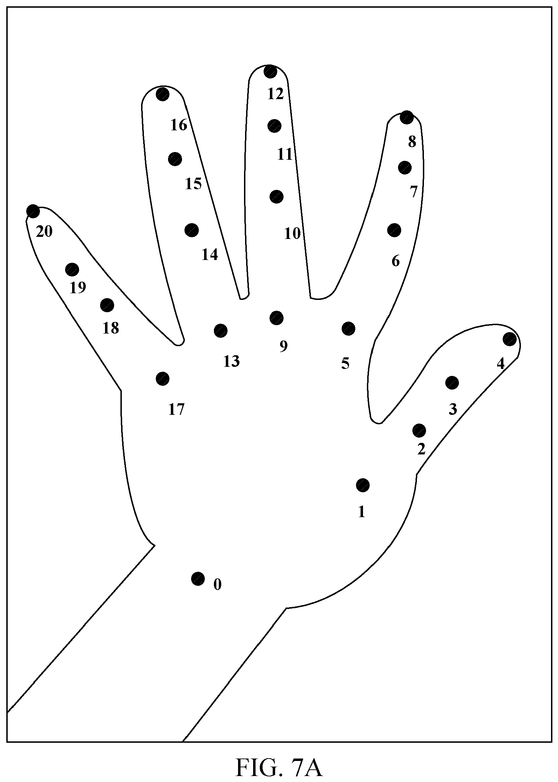

FIG. 7A is a schematic diagram of a palm bone point recognition result. Referring to FIG. 7A, 21 palm bone points (palm bone point 0 to palm bone point 20) in the palm image are finally recognized.

### 1-2. Recognize palm contour points

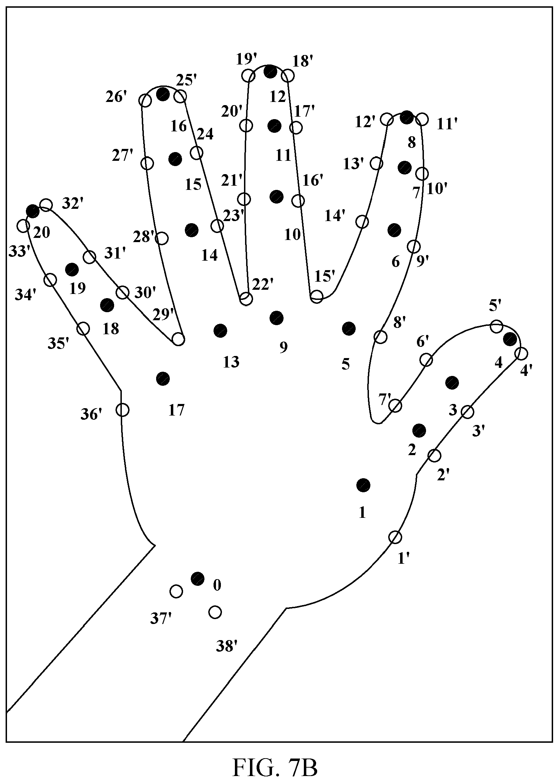

FIG. 7B is a schematic diagram of a palm contour point recognition result. Referring to FIG. 7B, 38 palm contour points (palm contour point 1' to palm contour point 38') are recognized based on the 21 palm bone points.

### 1-2-1. Calculate coordinates of a palm outer contour

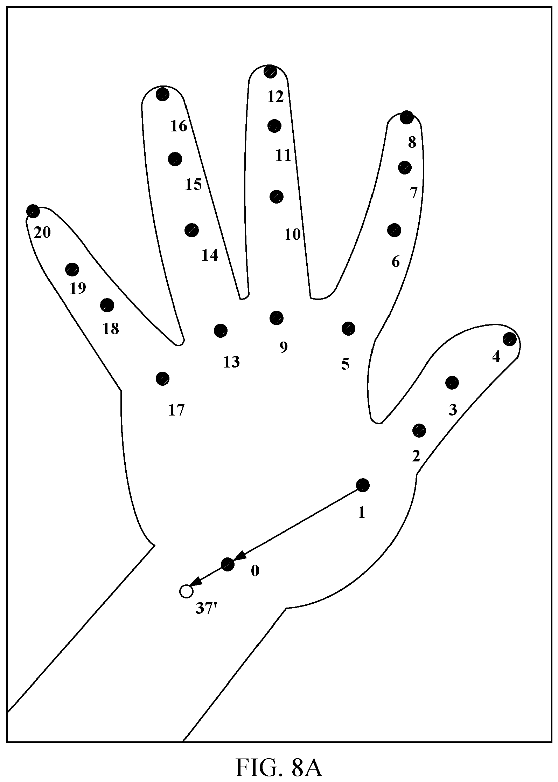

Coordinates of a palm outer contour on an extension line can be obtained by using the extension line (which may also be referred to as an extension line) of two palm bone points and a relative coefficient (which may also be referred to as a reference step length). For example, referring to FIG. 8A, palm contour point 37' is determined on an extension line generated based on palm bone point 0 and palm bone point 1. Palm contour point 37' is a palm outer contour point.

A calculation process of the coordinates of the palm outer contour is as follows:
Start point coordinates of a palm bone point: (Xa, Ya); and end point coordinates of the palm bone point: (Xb, Yb)
Target point coordinates of a palm contour point: (X, Y)
Target point coordinate X: $X = \frac{Xb - Xa}{\sqrt{{\left(Xb-Xa\right)}^{2} + {\left(Yb-Ya\right)}^{2}}} ∗ k + Xb$
Target point coordinate Y: $Y = \frac{Yb - Ya}{\sqrt{{\left(Xb-Xa\right)}^{2} + {\left(Yb-Ya\right)}^{2}}} ∗ k + Yb$
Referring to FIG. 7B, palm contour point 37', palm contour point 38', palm contour point 36', and palm contour point 8' are palm outer contour points.

### 1-2-2. Calculate coordinates of an interdigit

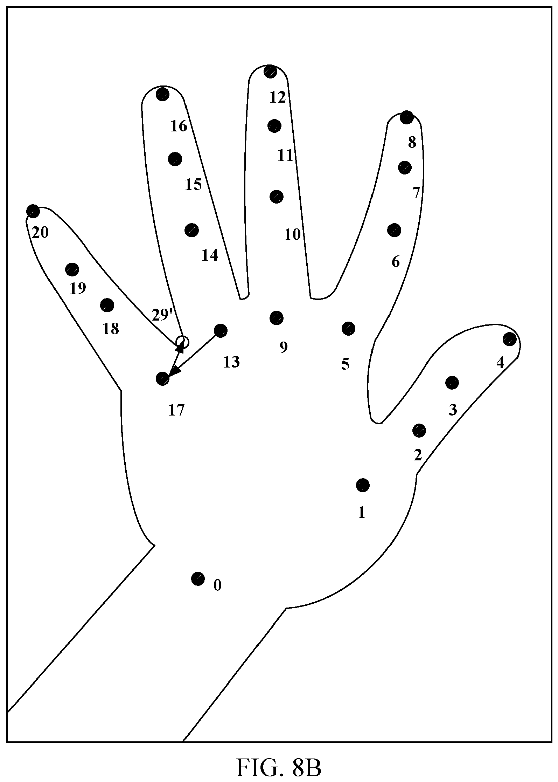

Interdigit coordinates on a mid-perpendicular line can be obtained by using a mid-perpendicular line of two palm bone points and a relative coefficient. For example, referring to FIG. 8B, palm contour point 29' is determined on a mid-perpendicular line generated based on palm bone point 13 and palm bone point 17. Palm contour point 29' is a palm interdigit point.

A calculation process of the coordinates of the interdigit is as follows:
Start point coordinates of a palm bone point: (Xa, Ya); and end point coordinates of the palm bone point: (Xb, Yb)
Midpoint coordinates: (Xmid, Ymid) $Xmid : Xmid = \frac{Xa + Xb}{2}$ $Ymid : Ymid = \frac{Ya + Yb}{2}$
Target point coordinates of a palm contour point: (X, Y)
If the target point is in a clockwise direction:
Target point coordinate X: $X = \frac{Xa - Yb}{\sqrt{{\left(Xb-Xa\right)}^{2} + {\left(Yb-Ya\right)}^{2}}} ∗ k + Xmid$
Target point coordinate Y: $Y = \frac{Xb - Xa}{\sqrt{{\left(Xb-Xa\right)}^{2} + {\left(Yb-Ya\right)}^{2}}} ∗ k + Ymid$
If the target point is in a counterclockwise direction:
Target point coordinate X: $X = \frac{Yb - Ya}{\sqrt{{\left(Xb-Xa\right)}^{2} + {\left(Yb-Ya\right)}^{2}}} ∗ k + Xmid$
Target point coordinate Y: $Y = \frac{Xa - Xb}{\sqrt{{\left(Xb-Xa\right)}^{2} + {\left(Yb-Ya\right)}^{2}}} ∗ k + Ymid$
Referring to FIG. 7B, palm contour point 29', palm contour point 22', and palm contour point 15' are palm interdigit points.

Using palm bone point 13 and palm bone point 17 as an example, if palm bone point 13 is used as a start point and the palm bone point 17 is used as an end point, palm contour point 29' is determined in a clockwise direction. If palm bone point 17 is used asa start point and palm bone point 13 is used as an end point, palm contour point 29' is determined in a counterclockwise direction.

### 1-2-3. Calculate coordinates of a finger contour edge

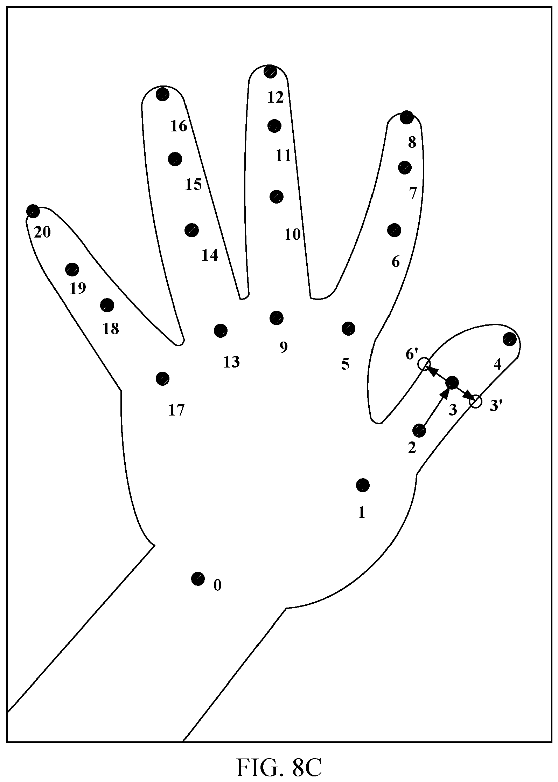

For vector AB generated by two palm bone points, on a normal vector of point A or point B, coordinates of a finger contour edge on the normal vector can be obtained according to a relative coefficient. For example, referring to FIG. 8C, palm contour point 3' and palm contour point 6' are determined on a normal vector generated based on palm bone point 2 and palm bone point 3, and palm contour point 3' and palm contour point 6' are finger contour edge points.

A calculation process of the coordinates of the finger contour edge is as follows:
Start point coordinates of a palm bone point: (Xa, Ya); and end point coordinates of the palm bone point: (Xb, Yb)
Target point coordinates of a palm contour point: (X, Y)
If the target point is in a clockwise direction:
Target point coordinate X: $X = \frac{Ya - Yb}{\sqrt{{\left(Xb-Xa\right)}^{2} + {\left(Yb-Ya\right)}^{2}}} ∗ k + Xb$
Target point coordinate Y: $Y = \frac{Xb - Xa}{\sqrt{{\left(Xb-Xa\right)}^{2} + {\left(Yb-Ya\right)}^{2}}} ∗ k + Yb$
If the target point is in a counterclockwise direction:
Target point coordinate X: $X = \frac{Yb - Ya}{\sqrt{{\left(Xb-Xa\right)}^{2} + {\left(Yb-Ya\right)}^{2}}} ∗ k + Xb$
Target point coordinate Y: $Y = \frac{Xa - Xb}{\sqrt{{\left(Xb-Xa\right)}^{2} + {\left(Yb-Ya\right)}^{2}}} ∗ k + Yb$

Referring to FIG. 7B, palm contour point 2' to palm contour point 7', palm contour point 9' to palm contour point 14', palm contour point 16' to palm contour point 21', palm contour point 23' to palm contour point 28', and palm contour point 30' to palm contour point 35' are finger contour edge points.

k in the foregoing formula is a relative coefficient.

### 1-3. Generate a palm contour

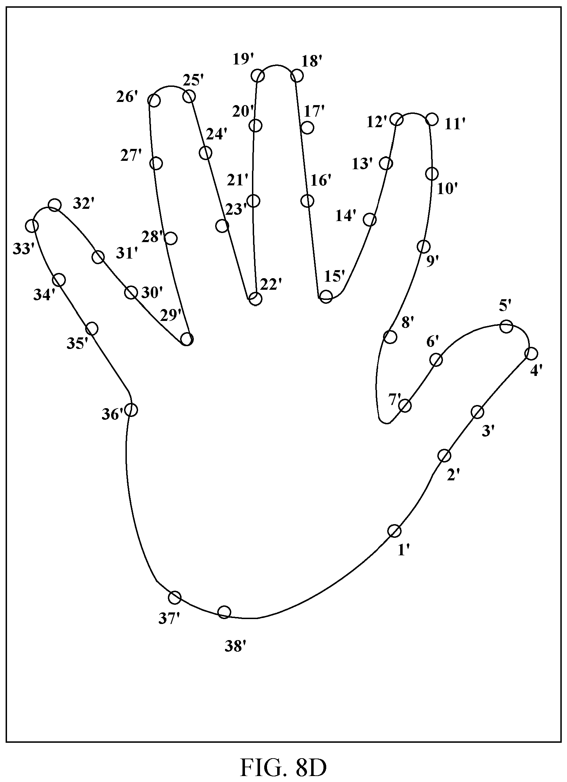

The palm contour points can be connected to obtain a palm contour. FIG. 8D is a schematic diagram of a palm contour. Referring to FIG. 8D, 38 palm contour points are connected to obtain the palm contour.

### 2. Generate a palm-scanning animation

In a palm-scanning payment scenario, after the palm contour is obtained, a palm-scanning animation may be generated based on the palm contour, to improve an interactive sense and a scientific sense brought to a user by palm-scanning payment.

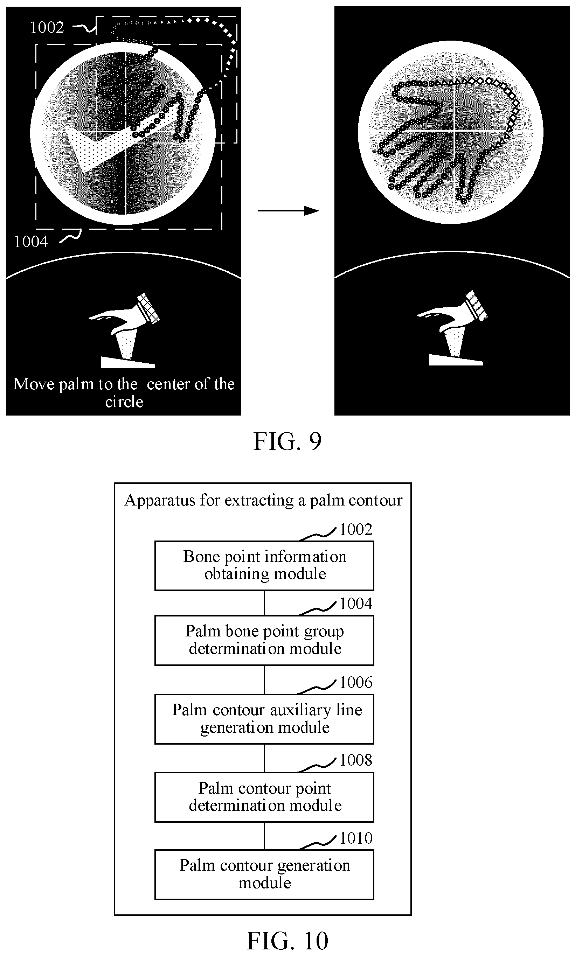

Referring to FIG. 9, 1002 in FIG. 9 represents a palm contour displayed on a screen, and 1004 represents a target display position on the screen. If the palm contour is not displayed at the target display position, the user is prompted to move the palm to the target display position. If the palm contour is displayed at the target display position, a user identity is verified based on the palm image. After the verification succeeds, payment is performed.

In the foregoing embodiments, the palm contour point is determined based on the palm bone point, to generate the palm contour. The palm bone points are not susceptible to interference from image backgrounds, and extracting the palm contour from the image based on the palm bone points can ensure extraction accuracy of the palm contour. In addition, determining the palm contour points by using the geometric method can also ensure efficiency of data processing, ensure recognition performance, and improve the extraction efficiency of the palm contour.

Operations in flowcharts involved in the foregoing embodiments are displayed in sequence based on indication of arrows, but the operations are not necessarily performed in sequence based on a sequence indicated by the arrows. Unless indicated clearly, the operations do not need to be performed in a strict sequence, and can be performed in another sequence. In addition, at least some operations in the flowcharts involved in the foregoing embodiments may include a plurality of operations or a plurality of stages, and these operations or stages are not necessarily performed at the same moment, but may be performed at different moments. The operations or stages are not necessarily performed in sequence, but may be performed by turn or alternately with other operations or at least part of operations or stages in other operations.

Based on the same inventive concept, the embodiments of this application further provide an apparatus for extracting a palm contour which is configured to implement the foregoing method for extracting a palm contour, and further provides an apparatus for generating an instruction for controlling an object which is configured to implement the foregoing method for generating an instruction for controlling an object. An implementation solution to the problem provided by the apparatus is similar to the implementation solution described in the foregoing method. Therefore, for specific limitations in one or more embodiments of the apparatus for extracting a palm contour provided below, reference may be made to the foregoing limitations on the method for extracting a palm contour. For specific limitations in one or more embodiments of the apparatus for generating an instruction for controlling an object provided below, reference may be made to the foregoing limitations on the method for generating an instruction for controlling an object. Details are not described herein again.

In an embodiment, as shown in FIG. 10, An apparatus for extracting a palm contour is provided, including: a bone point information obtaining module 1002, a palm bone point group determination module1004, a palm contour auxiliary line generation module1006, a palm contour point determination module 1008, and a palm contour generation module 1010.

The bone point information obtaining module 1002 is configured to obtain bone point information for each of palm bone points in a target palm image, the bone point information including a position and a bone point type of the respective palm bone point.

The palm bone point group determination module 1004 is configured to determine a plurality of palm bone point groups from the palm bone points based on the bone point type of the respective palm bone point, each palm bone point group corresponding to at least one geometric processing type.

The palm contour auxiliary line generation module 1006 is configured to, for each of the palm bone point groups, generate at least one auxiliary line based on the positions of the palm bone points in the respective palm bone point group according to the corresponding geometric processing type.

The palm contour point determination module 1008 is configured to, for each of the palm bone point groups, determine at least one palm contour point on the generated at least one auxiliary line based on the positions of the palm bone points in the respective palm bone point group and a reference step length, to obtain a position of each of the determined at least one palm contour point corresponding to the respective palm bone point group.

The palm contour generation module 1010 is configured to generate the palm contour based on the position of each of the determined at least one palm contour point corresponding to the respective palm bone point group.

In the foregoing apparatus for extracting a palm contour, there is no need to perform complex data processing on pixel information of the palm image, and geometry processing is performed based on the bone point information for each of the palm bone points in the palm image, so that the positions of the palm contour points can be conveniently determined from the palm image, to generate the palm contour based on the positions of the palm contour points. Positions and bone point types of the palm bone point are not susceptible to interference from image backgrounds. Extracting the palm contour based on the positions and the bone point types of the palm bone points in the palm image can effectively improve extraction accuracy of the palm contour.

In all embodiments of the present disclosure, the bone point type can be determined by a finger parameter and an intra-finger joint parameter. The palm bone point group determination module 1004 can be further configured to: determine a first palm bone point group corresponding to a first geometry processing type, the first palm bone point group comprising adjacent palm bone points whose intra-finger joint parameter is a preset joint parameter; determine a second palm bone point group corresponding to a second geometry processing type, the second palm bone point group comprising adjacent palm bone points with the same finger parameter; and determine a third palm bone point group corresponding to a third geometry processing type, the third palm bone point group comprising a palm bone point with a preset bone point type and a palm bone point closest to the palm bone point with the preset bone point type.

In all embodiments of the present disclosure, the palm contour auxiliary line generation module 1006 can be further configured to: determine at least one auxiliary line type based on the respective geometry processing type corresponding to the respective palm bone point group; generate a bone point line segment corresponding to the respective palm bone point group based on the position of the respective palm bone point in the respective palm bone point group; and perform geometry processing on the bone point line segment based on the respective auxiliary line type, to obtain the at least one auxiliary line corresponding to the respective palm bone point group.

In all embodiments of the present disclosure, the geometry processing type can include any one of a first geometry processing type, a second geometry processing type, or a third geometry processing type, an auxiliary line type corresponding to the first geometry processing type can include at least one of a mid-perpendicular line type or an extension line type, an auxiliary line type corresponding to the second geometry processing type can include a normal line type, and an auxiliary line type corresponding to the third geometry processing type can include at least one of a normal line type or an extension line type.

In all embodiments of the present disclosure, the palm contour auxiliary line generation module 1006 can be further configured to: when the respective auxiliary line type is a mid-perpendicular line type, use a mid-perpendicular line of the bone point line segment as the auxiliary line; when the respective auxiliary line type is an extension line type, determine a target bone point from the palm bone points in the palm bone point group, and use an extension line that corresponds to the bone point line segment and starts at the target bone pointas the auxiliary line; and when the respective auxiliary line type is a normal line type, determine the target bone point from the palm bone points in the palm bone point group, and use a normal line of the bone point line segment at the target bone point as the auxiliary line.

In all embodiments of the present disclosure, the palm contour point determination module 1008 is further configured to: generate, based on the position of the palm bone point in the respective palm bone point group, a bone point line segment corresponding to the respective palm bone point group; determine a reference point from the bone point line segment; and move on the generated respective auxiliary line, starting from the reference point, in a movement direction corresponding to the respective auxiliary line, by the reference step length corresponding to the respective palm bone point group, to obtain a palm contour point and a position of the obtained palm contour point.

In all embodiments of the present disclosure, the respective auxiliary line can include at least one of a mid-perpendicular line, an extension line, or a normal line, a movement direction corresponding to the mid-perpendicular line can be a direction away from the center of a palm, a movement direction corresponding to the extension line can be an extension direction of the bone point line segment, and a movement direction corresponding to the normal line can be a direction perpendicular to the bone point line segment.

In all embodiments of the present disclosure, each of the palm bone points can have a corresponding identifier. The palm contour generation module 1010 can be further configured to: determine, based on the identifiers of the palm bone points in the respective palm bone point group and preset mapping information, an identifier of each of the determined at least one palm contour point corresponding to the respective palm bone point group for indicating a sorting order of the respective palm contour point, wherein the preset mapping information can include an mapping relationship between the identifiers of the palm bone points in the respective palm bone point group and the identifier of each of the at least one palm contour point determined based on the respective palm bone point group; and connect the positions of the palm contour points in the order as indicated by the identifiers of the palm contour points, to obtain the palm contour corresponding to the target palm image.

In all embodiments of the present disclosure, the bone point information obtaining module 1002 can be further configured to input the target palm image into a target recognition model that has been trained to recognize bone point information, to obtain the bone point information for each of the palm bone points.

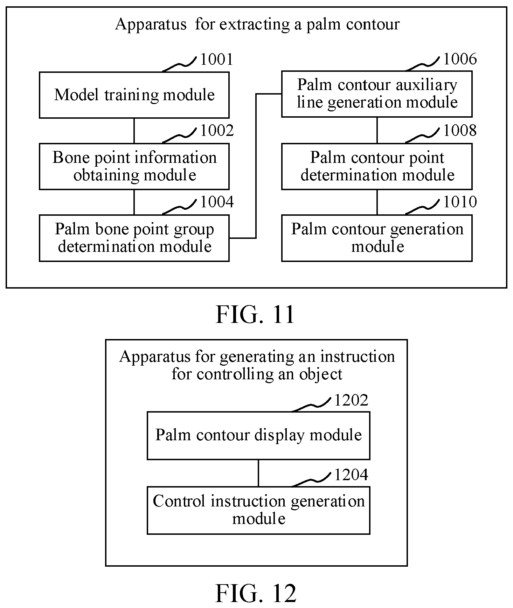

Referring to FIG. 11, the apparatus for extracting a palm contour can further include:
a model training module 1001, configured to: obtain a training data set, where the training data set includes a plurality of training palm images and training bone point information for each of the training palm images; select a current training palm image from the training data set; input the current palm image into an initial recognition model for predicting bone point information, to obtain predicted bone point information for the current training palm image; adjust a model parameter of the initial recognition model based on a difference between the predicted bone point information and the training bone point information for the current training palm image, to obtain an intermediate recognition model; and use a next training palm image as the current palm image, use the intermediate recognition model as the initial recognition model, and go back to perform the operation of inputting the current palm image into the initial recognition model until a convergence condition is met, to obtain the target recognition model.

In all embodiments of the present disclosure, the palm contour is used for generating a palm animation.

In an embodiment, as shown in FIG. 12, an apparatus for generating an instruction for controlling an object is provided, including: a palm contour display module 1202 and a control instruction generation module 1204.

The palm contour display module 1202 is configured to display a palm contour which is extracted based on a target palm image.

The control instruction generation module 1204 is configured to generate an object control instruction based on display information of the palm contour.

An extraction process of the palm contour includes the following operations: obtaining bone point information for each of palm bone points in the target palm image, the bone point information including a position and a bone point type of the respective palm bone point; determining a plurality of palm bone point groups from the palm bone points based on the bone point type of the respective palm bone point, each palm bone point group corresponding to at least one geometric processing type; performing following steps to each of the palm bone point groups: - generating at least one auxiliary line based on the positions of the palm bone points in the respective palm bone point group according to the corresponding geometric processing type; - determining at least one palm contour point on the generated at least one auxiliary line based on the positions of the palm bone points in the respective palm bone point group and a reference step length, to obtain a position of each of the determined at least one palm contour point corresponding to the respective palm bone point group; and generating the palm contour based on the position of each of the determined at least one palm contour point corresponding to the respective palm bone point group.

In the foregoing apparatus for generating an instruction for controlling an object, the positions of the palm contour points are determined by performing geometry processing based on the bone point information for each of the palm bone points in the palm image, and the palm contour is generated based on the positions of the palm contour points. The palm contour is extracted without the need to perform complex data processing on pixel information of the palm image, and has high extraction accuracy for being not susceptible to interference from image backgrounds. Extracting an accurate palm contour is also helpful to ensure accurate display, and further helpful to improve generation accuracy of the object control instruction. The object control instruction is automatically generated based on the display information of the palm contour, which can also improve the generation efficiency of the object control instruction.

In all embodiments of the present disclosure, the control instruction generation module 1204 can be further configured to: generate the object control instruction when a position difference between a display position of the palm contour and a target display position is less than a preset threshold; and generate prompt information based on the position difference when the position difference is greater than or equal to the preset threshold, where the prompt information is configured to prompt to move the palm to reduce the position difference.

In all embodiments of the present disclosure, the target palm image is a palm image corresponding to a virtual resource transfer party, the object control instruction is a transfer instruction for instructing the transfer of the virtual resource from a resource account of the virtual resource transfer party to a target account.

All or some of the modules in the foregoing apparatus for extracting a palm contour and apparatus for generating an instruction for controlling an object may be implemented by software, hardware, and a combination thereof. The foregoing modules may be built in or independent of one or more processors of a computer device in a hardware form, or may be stored in a memory of the computer device in a software form, so that the one or more processors invoke and perform the operations corresponding to the foregoing modules.

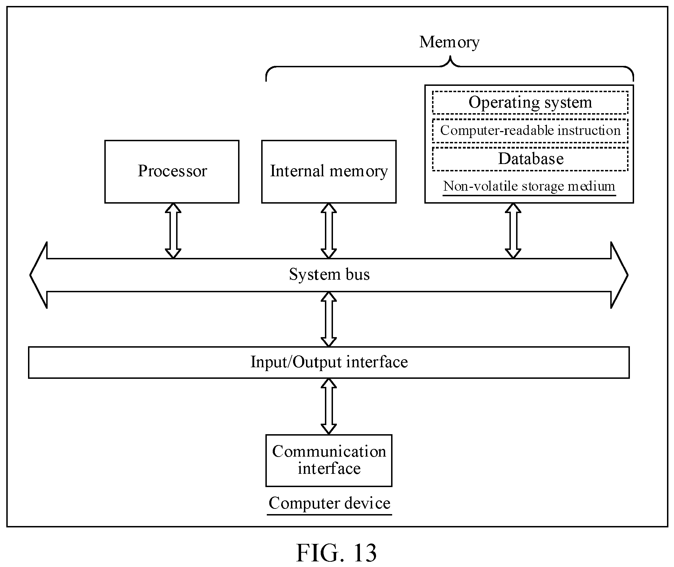

In an embodiment, a computer device is provided. The computer device may be a server, and may have an internal structure diagram shown in FIG. 13. The computer device includes a processor, a memory, an input/output (I/O for short) interface, and a communication interface. The processor, the memory, and the input/output interface are connected through a system bus, and the communication interface is connected to the system bus through the input/output interface. The processor of the computer device is configured to provide computing and control capabilities. The memory of the computer device includes a non-volatile storage medium and an internal memory. The non-volatile storage medium stores an operating system, computer-readable instructions, and a database. The internal memory provides an environment for running of the operating system and the computer-readable instructions in the non-volatile storage medium. The database of the computer device is configured to store data such as the target recognition model, the reference step length, the preset mapping relationship, and the like. The input/output interface of the computer device is configured to exchange information between the processor and an external device. The communication interface of the computer device is configured to communicate with an external terminal through a network connection. The computer-readable instructions are executed by the processor to implement a method for extracting a palm contour or a method for generating an instruction for controlling an object.

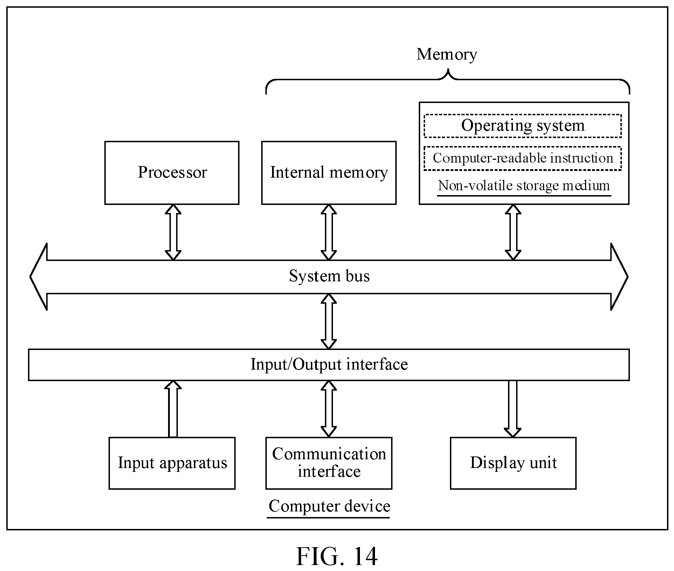

In an embodiment, a computer device is provided. The computer device may be a terminal, and may have an internal structure diagram shown in FIG. 14. The computer device includes a processor, a memory, an input/output interface, a communication interface, a display unit, and an input apparatus. The processor, the memory, and the input/output interface are connected through a system bus, and the communication interface, the display unit, and the input apparatus are connected to the system bus through the input/output interface. The processor of the computer device is configured to provide computing and control capabilities. The memory of the computer device includes a non-volatile storage medium and an internal memory. The non-volatile storage medium stores an operating system and computer-readable instructions. The internal memory provides an environment for running of the operating system and the computer-readable instructions in the non-volatile storage medium. The input/output interface of the computer device is configured to exchange information between the processor and an external device. The communication interface of the computer device is configured to communicate with an external terminal in a wired or a wireless manner, and the wireless manner may be implemented by using WIFI, a mobile cellular network, NFC (near field communication), or other technologies. The computer-readable instructions are executed by the processor to implement a method for extracting a palm contour or a method for generating an instruction for controlling an object. The display unit of the computer device is configured to form a visible picture, and may be a display screen, a projection apparatus, or a virtual reality imaging apparatus. The display screen may be a liquid crystal display screen or an electronic ink display screen. The input apparatus of the computer device may be a touch layer covering the display screen, or may be a key, a trackball, or a touch pad disposed on a housing of the computer device, or may be an external keyboard, a touch pad, a mouse, or the like.

A person skilled in the art may understand that, the structure shown in FIG. 13 and FIG. 14 is merely a block diagram of a part of a structure related to the solutions of this application and does not limit the computer device to which the solutions of this application are applied. Specifically, the computer device may include more or fewer components than those in the drawings, or some components are combined, or a different component deployment is used.

In an embodiment, a computer device is provided, including a memory and one or more processors, the memory having computer-readable instructions stored therein, the computer-readable instructions, when executed by the one or more processors, implementing the operations in the foregoing method embodiments.

In an embodiment, a computer-readable storage medium is provided, having computer-readable instructions stored therein, the computer-readable instructions, when executed by one or more processors, implementing the operations in the foregoing method embodiments.

A computer program product includes computer-readable instructions, the computer-readable instructions, when executed by one or more processors, implementing the operations of the foregoing method embodiments.

The user information (including, but not limited to, user equipment information, user personal information, and the like), data (including, but not limited to, data for analysis, stored data, displayed data, and the like), involved in this application all are information and data that are authorized by the user or fully authorized by each party, and the collection, use, and processing of relevant data need to comply with relevant laws and regulations of relevant countries and regions.

A person of ordinary skill in the art may understand that all or some of the procedures of the methods of the foregoing embodiments may be implemented by computer-readable instructions instructing relevant hardware. The computer-readable instructions may be stored in a non-volatile computer-readable storage medium. When the computer-readable instructions are executed, the procedures of the embodiments of the foregoing methods may be included. Any reference to a memory, a database, or another medium used in the embodiments provided in this application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM) or an external cache. For the purpose of description instead of limitation, the RAM is available in a plurality of forms, such as a static random access memory (SRAM) or a dynamic random access memory (DRAM). The database involved in the embodiments provided in this application may include at least one of a relational database and a non-relational database. The non-relational database may include a blockchain-based distributed database, but is not limited thereto. The processor involved in the embodiments provided in this application may be a general-purpose processor, a central processing unit, a graphics processing unit, a digital signal processor, a programmable logic device, a quantum computing-based data processing logic device, and are not limited thereto.

The technical features in the foregoing embodiments may be combined in different manners from other embodiments. For concise description, not all possible combinations of the technical features in the foregoing embodiments are described. However, as long as combinations of the technical features do not conflict with each other, the combinations of the technical features are considered as falling within the scope described in this specification.

The foregoing embodiments only show several implementations of this application and are described in detail, but are not construed as a limitation to the scope of the patent application. The protection scope of this application is subject to the protection scope of the appended claims.

## Claims

1. A method for extracting a palm contour, performed by a computer device, the method comprising:
obtaining bone point information for each of palm bone points in a target palm image, the bone point information comprising a position and a bone point type of the respective palm bone point (S202);
determining a plurality of palm bone point groups from the palm bone points based on the bone point type of the respective palm bone point, each palm bone point group corresponding to at least one geometric processing type (S204);
performing following steps to each of the palm bone point groups:
- generating at least one auxiliary line based on the positions of the palm bone points in the respective palm bone point group according to the corresponding geometric processing type (S206);
- determining at least one palm contour point on the generated at least one auxiliary line based on the positions of the palm bone points in the respective palm bone point group and a reference step length, to obtain a position of each of the determined at least one palm contour point corresponding to the respective palm bone point group (S208); and
generating the palm contour based on the position of each of the determined at least one palm contour point corresponding to the respective palm bone point group (S210);
wherein the bone point type is determined by a finger parameter and an intra-finger joint parameter, and the determining a plurality of palm bone point groups from the palm bone points based on the bone point type of the respective palm bone point comprises:
determining a first palm bone point group corresponding to a first geometry processing type, the first palm bone point group comprising adjacent palm bone points whose intra-finger joint parameter is a preset j oint parameter;
determining a second palm bone point group corresponding to a second geometry processing type, the second palm bone point group comprising adjacent palm bone points with the same finger parameter; and
determining a third palm bone point group corresponding to a third geometry processing type, the third palm bone point group comprising a palm bone point with a preset bone point type and a palm bone point closest to the palm bone point with the preset bone point type.

2. The method according to claim 1, wherein the generating at least one auxiliary line based on the positions of the palm bone points in the respective palm bone point group according to the corresponding geometric processing type comprises:
determining at least one auxiliary line type based on the respective geometry processing type corresponding to the respective palm bone point group;
generating a bone point line segment corresponding to the respective palm bone point group based on the position of the respective palm bone point in the respective palm bone point group; and
performing geometry processing on the bone point line segment based on the respective auxiliary line type, to obtain the at least one auxiliary line corresponding to the respective palm bone point group.

3. The method according to claim 2, wherein the geometry processing type comprises any one of a first geometry processing type, a second geometry processing type, or a third geometry processing type, an auxiliary line type corresponding to the first geometry processing type comprises at least one of a mid-perpendicular line type or an extension line type, an auxiliary line type corresponding to the second geometry processing type comprises a normal line type, and an auxiliary line type corresponding to the third geometry processing type comprises at least one of a normal line type or an extension line type.

4. The method according to claim 3, wherein the performing geometry processing on the bone point line segment based on the respective auxiliary line type, to obtain the at least one auxiliary line corresponding to the respective palm bone point group comprises:
when the respective auxiliary line type is a mid-perpendicular line type, using a mid-perpendicular line of the bone point line segment as the auxiliary line;
when the respective auxiliary line type is an extension line type, determining a target bone point from the palm bone points in the respective palm bone point group, and using an extension line that corresponds to the bone point line segment and starts at the target bone point as the auxiliary line; and
when the respective auxiliary line type is a normal line type, determining a target bone point from the palm bone points in the respective palm bone point group, and using a normal line of the bone point line segment at the target bone point as the auxiliary line.

5. The method according to claim 1, wherein the determining at least one palm contour point on the generated at least one auxiliary line based on the positions of the palm bone points in the respective palm bone point group and a reference step length, to obtain a position of each of the determined at least one palm contour point corresponding to the respective palm bone point group comprises:
generating, based on the position of the respective palm bone point in the respective palm bone point group, a bone point line segment corresponding to the respective palm bone point group;
determining a reference point on the bone point line segment; and
moving on the generated respective auxiliary line, starting from the reference point, in a movement direction corresponding to the respective auxiliary line, by the reference step length corresponding to the respective palm bone point group, to obtain a palm contour point and a position of the obtained palm contour point.

6. The method according to claim 5, wherein the respective auxiliary line comprises at least one of a mid-perpendicular line, an extension line, or a normal line, a movement direction corresponding to the mid-perpendicular line is a direction away from the center of a palm, a movement direction corresponding to the extension line is an extension direction of the bone point line segment, and a movement direction corresponding to the normal line is a direction perpendicular to the bone point line segment.

7. The method according to claim 1, wherein each of the palm bone points has a corresponding identifier, and the generating the palm contour based on the position of each of the determined at least one palm contour point corresponding to the respective palm bone point group comprises:
determining, based on the identifiers of the palm bone points in the respective palm bone point group and preset mapping information, an identifier of each of the determined at least one palm contour point corresponding to the respective palm bone point group for indicating a sorting order of the respective palm contour point, wherein the preset mapping information comprises an mapping relationship between the identifiers of the palm bone points in the respective palm bone point group and the identifier of each of the at least one palm contour point determined based on the respective palm bone point group; and
connecting the positions of the palm contour points in the order as indicated by the identifiers of the palm contour points, to obtain the palm contour corresponding to the target palm image.

8. The method according to claim 1, wherein the obtaining bone point information for each of palm bone points in a target palm image comprises:
inputting the target palm image into a target recognition model that has been trained to recognize bone point information, to obtain the bone point information for each of the palm bone points; and
a training process of the target recognition model comprises the following operations:
obtaining a training data set, wherein the training data set comprises a plurality of training palm images and training bone point information for each of the training palm images;
selecting a current training palm image from the training data set;
inputting the current training palm image into an initial recognition model for predicting bone point information, to obtain predicted bone point information for the current training palm image;
adjusting a model parameter of the initial recognition model based on a difference between the predicted bone point information and the training bone point information for the current training palm image, to obtain an intermediate recognition model; and
using a next training palm image as the current training palm image, using the intermediate recognition model as the initial recognition model, and going back to perform the operation of inputting the current training palm image into the initial recognition model until a convergence condition is met, to obtain the target recognition model.

9. The method according to claim 1, wherein
the reference step length increases as a palm size corresponding to the target palm image increases, and/or
the reference step length increases as a palm depth corresponding to the target palm image decreases.

10. The method according to claim 1, wherein before the obtaining bone point information for each of palm bone points in the target palm image, the method further comprises:
displaying a palm contour which is extracted based on a target palm image (S602); and
generating an object control instruction based on display information of the palm contour (S604).

11. The method according to claim 10, wherein the generating an object control instruction based on display information of the palm contour comprises:
generating the object control instruction when a position difference between a display position of the palm contour and a target display position is less than a preset threshold; and
generating prompt information based on the position difference when the position difference is greater than or equal to the preset threshold, wherein the prompt information is configured to prompt to move the palm to reduce the position difference;
preferably, the target palm image is a palm image corresponding to a virtual resource transfer party, the object control instruction is a transfer instruction for instructing the transfer of the virtual resource from a resource account of the virtual resource transfer party to a target account.

12. A computer device, comprising a memory and one or more processors, the memory having computer-readable instructions stored therein, and the one or more processors, when executing the computer-readable instructions, implementing the operations of the method according to any one of claims 1 to 11.

13. A computer-readable storage medium, having computer-readable instructions stored therein, the computer-readable instructions, when executed by one or more processors, implementing the operations of the method according to any one of claims 1 to 11.

14. A computer program product, comprising computer-readable instructions, the computer-readable instructions, when executed by one or more processors, implementing the operations of the method according to any one of claims 1 to 11.

## Patentansprüche

1. Verfahren zum Extrahieren einer Handflächenkontur, durchgeführt von einer Computervorrichtung, wobei das Verfahren umfasst:
Erhalten von Knochenpunktinformation für jeden der Handflächenknochenpunkte in einem Ziel-Handflächenbild, wobei die Knochenpunktinformation eine Position und einen Knochenpunkttyp des jeweiligen Handflächenknochenpunkts umfasst (S202);
Bestimmen einer Mehrzahl von Handflächenknochenpunktgruppen aus den Handflächenknochenpunkten basierend auf dem Knochenpunkttyp des jeweiligen Handflächenknochenpunkts, wobei jede Handflächenknochenpunktgruppe mindestens einem geometrischen Verarbeitungstyp entspricht (S204);
Durchführen der folgenden Schritte für jede der Handflächenknochenpunktgruppen:
- Erzeugen mindestens einer Hilfslinie basierend auf den Positionen der Handflächenknochenpunkte in der jeweiligen Handflächenknochenpunktgruppe gemäß dem entsprechenden geometrischen Verarbeitungstyp (S206);
- Bestimmen mindestens eines Handflächenkonturpunkts auf der erzeugten mindestens einen Hilfslinie basierend auf den Positionen der Handflächenknochenpunkte in der jeweiligen Handflächenknochenpunktgruppe und einer Referenzschrittlänge, um eine Position jedes der bestimmten mindestens einen Handflächenkonturpunkte zu erhalten, der der jeweiligen Handflächenknochenpunktgruppe entspricht (S208); und Erzeugen der Handflächenkontur basierend auf der Position jedes der bestimmten mindestens einen Handflächenkonturpunkte, der der jeweiligen Handflächenknochenpunktgruppe entspricht (S210);
wobei der Knochenpunkttyp durch einen Fingerparameter und einen fingerinternen Gelenkparameter bestimmt wird und das Bestimmen einer Mehrzahl von Handflächenknochenpunktgruppen aus den Handflächenknochenpunkten basierend auf dem Knochenpunkttyp des jeweiligen Handflächenknochenpunkts umfasst:
Bestimmen einer ersten Handflächenknochenpunktgruppe, die einem ersten geometrischen Verarbeitungstyp entspricht, wobei die erste Handflächenknochenpunktgruppe benachbarte Handflächenknochenpunkte umfasst, deren fingerinterner Gelenkparameter ein voreingestellter Gelenkparameter ist;
Bestimmen einer zweiten Handflächenknochenpunktgruppe, die einem zweiten geometrischen Verarbeitungstyp entspricht, wobei die zweite Handflächenknochenpunktgruppe benachbarte Handflächenknochenpunkte mit demselben Fingerparameter umfasst; und
Bestimmen einer dritten Handflächenknochenpunktgruppe, die einem dritten geometrischen Verarbeitungstyp entspricht, wobei die dritte Handflächenknochenpunktgruppe einen Handflächenknochenpunkt mit einem voreingestellten Knochenpunkttyp und einen Handflächenknochenpunkt umfasst, der dem Handflächenknochenpunkt mit dem voreingestellten Knochenpunkttyp am nächsten liegt.

2. Verfahren nach Anspruch 1, wobei das Erzeugen mindestens einer Hilfslinie basierend auf den Positionen der Handflächenknochenpunkte in der jeweiligen Handflächenknochenpunktgruppe gemäß dem entsprechenden geometrischen Verarbeitungstyp umfasst:
Bestimmen mindestens eines Hilfslinientyps basierend auf dem jeweiligen geometrischen Verarbeitungstyp, der der jeweiligen Handflächenknochenpunktgruppe entspricht;
Erzeugen eines Knochenpunktliniensegments, das der jeweiligen Handflächenknochenpunktgruppe entspricht, basierend auf der Position des jeweiligen Handflächenknochenpunkts in der jeweiligen Handflächenknochenpunktgruppe; und
Durchführen einer geometrischen Verarbeitung an dem Knochenpunktliniensegment basierend auf dem jeweiligen Hilfslinientyp, um die mindestens eine Hilfslinie zu erhalten, die der jeweiligen Handflächenknochenpunktgruppe entspricht.

3. Verfahren nach Anspruch 2, wobei der geometrische Verarbeitungstyp einen von einem ersten geometrischen Verarbeitungstyp, einem zweiten geometrischen Verarbeitungstyp oder einem dritten geometrischen Verarbeitungstyp umfasst, ein Hilfslinientyp, der dem ersten geometrischen Verarbeitungstyp entspricht, mindestens einen von einem Mittelsenkrechtentyp oder einem Verlängerungslinientyp umfasst, ein Hilfslinientyp, der dem zweiten geometrischen Verarbeitungstyp entspricht, einen Normalentyp umfasst, und ein Hilfslinientyp, der dem dritten geometrischen Verarbeitungstyp entspricht, mindestens einen von einem Normalentyp oder einem Verlängerungslinientyp umfasst.

4. Verfahren nach Anspruch 3, wobei das Durchführen einer geometrischen Verarbeitung an dem Knochenpunktliniensegment basierend auf dem jeweiligen Hilfslinientyp, um die mindestens eine Hilfslinie zu erhalten, die der jeweiligen Handflächenknochenpunktgruppe entspricht, umfasst:
wenn der jeweilige Hilfslinientyp ein Mittelsenkrechtentyp ist, Verwenden einer Mittelsenkrechten des Knochenpunktliniensegments als die Hilfslinie;
wenn der jeweilige Hilfslinientyp ein Verlängerungslinientyp ist, Bestimmen eines Zielknochenpunkts aus den Handflächenknochenpunkten in der jeweiligen Handflächenknochenpunktgruppe und Verwenden einer Verlängerungslinie, die dem Knochenpunktliniensegment entspricht und am Zielknochenpunkt beginnt, als die Hilfslinie; und
wenn der jeweilige Hilfslinientyp ein Normalentyp ist, Bestimmen eines Zielknochenpunkts aus den Handflächenknochenpunkten in der jeweiligen Handflächenknochenpunktgruppe und Verwenden einer Normalen des Knochenpunktliniensegments am Zielknochenpunkt als die Hilfslinie.

5. Verfahren nach Anspruch 1, wobei das Bestimmen mindestens eines Handflächenkonturpunkts auf der erzeugten mindestens einen Hilfslinie basierend auf den Positionen der Handflächenknochenpunkte in der jeweiligen Handflächenknochenpunktgruppe und einer Referenzschrittlänge, um eine Position jedes der bestimmten mindestens einen Handflächenkonturpunkte zu erhalten, der der jeweiligen Handflächenknochenpunktgruppe entspricht, umfasst:
Erzeugen, basierend auf der Position des jeweiligen Handflächenknochenpunkts in der jeweiligen Handflächenknochenpunktgruppe, eines Knochenpunktliniensegments, das der jeweiligen Handflächenknochenpunktgruppe entspricht;
Bestimmen eines Referenzpunkts auf dem Knochenpunktliniensegment; und
Bewegen auf der erzeugten jeweiligen Hilfslinie, ausgehend vom Referenzpunkt, in einer Bewegungsrichtung, die der jeweiligen Hilfslinie entspricht, um die Referenzschrittlänge, die der jeweiligen Handflächenknochenpunktgruppe entspricht, um einen Handflächenkonturpunkt und eine Position des erhaltenen Handflächenkonturpunkts zu erhalten.

6. Verfahren nach Anspruch 5, wobei die jeweilige Hilfslinie mindestens eine von einer Mittelsenkrechten, einer Verlängerungslinie oder einer Normalen umfasst, eine Bewegungsrichtung, die der Mittelsenkrechten entspricht, eine Richtung weg vom Mittelpunkt einer Handfläche ist, eine Bewegungsrichtung, die der Verlängerungslinie entspricht, eine Verlängerungsrichtung des Knochenpunktliniensegments ist, und eine Bewegungsrichtung, die der Normalen entspricht, eine Richtung senkrecht zum Knochenpunktliniensegment ist.

7. Verfahren nach Anspruch 1, wobei jeder der Handflächenknochenpunkte eine entsprechende Kennung aufweist und das Erzeugen der Handflächenkontur basierend auf der Position jedes der bestimmten mindestens einen Handflächenkonturpunkte, der der jeweiligen Handflächenknochenpunktgruppe entspricht, umfasst:
Bestimmen, basierend auf den Kennungen der Handflächenknochenpunkte in der jeweiligen Handflächenknochenpunktgruppe und voreingestellter Zuordnungsinformation, einer Kennung jedes der bestimmten mindestens einen Handflächenkonturpunkte, der der jeweiligen Handflächenknochenpunktgruppe entspricht, zur Angabe einer Sortierreihenfolge des jeweiligen Handflächenkonturpunkts, wobei die voreingestellte Zuordnungsinformation eine Zuordnungsbeziehung zwischen den Kennungen der Handflächenknochenpunkte in der jeweiligen Handflächenknochenpunktgruppe und der Kennung jedes der mindestens einen Handflächenkonturpunkte umfasst, der basierend auf der jeweiligen Handflächenknochenpunktgruppe bestimmt wird; und
Verbinden der Positionen der Handflächenkonturpunkte in der Reihenfolge, wie durch die Kennungen der Handflächenkonturpunkte angegeben, um die Handflächenkontur zu erhalten, die dem Ziel-Handflächenbild entspricht.

8. Verfahren nach Anspruch 1, wobei das Erhalten von Knochenpunktinformation für jeden der Handflächenknochenpunkte in einem Ziel-Handflächenbild umfasst:
Eingeben des Ziel-Handflächenbilds in ein Zielerkennungsmodell, das trainiert wurde, um Knochenpunktinformation zu erkennen, um die Knochenpunktinformation für jeden der Handflächenknochenpunkte zu erhalten; und
ein Trainingsprozess des Zielerkennungsmodells umfasst die folgenden Operationen:
Erhalten eines Trainingsdatensatzes, wobei der Trainingsdatensatz eine Mehrzahl von Trainings-Handflächenbildern und Trainings-Knochenpunktinformation für jedes der Trainings-Handflächenbilder umfasst;
Auswählen eines aktuellen Trainings-Handflächenbilds aus dem Trainingsdatensatz;
Eingeben des aktuellen Trainings-Handflächenbilds in ein anfängliches Erkennungsmodell zur Vorhersage von Knochenpunktinformation, um vorhergesagte Knochenpunktinformation für das aktuelle Trainings-Handflächenbild zu erhalten;
Anpassen eines Modellparameters des anfänglichen Erkennungsmodells basierend auf einer Differenz zwischen der vorhergesagten Knochenpunktinformation und der Trainings-Knochenpunktinformation für das aktuelle Trainings-Handflächenbild, um ein Zwischenerkennungsmodell zu erhalten; und
Verwenden eines nächsten Trainings-Handflächenbilds als das aktuelle Trainings-Handflächenbild, Verwenden des Zwischenerkennungsmodells als das anfängliche Erkennungsmodell und Zurückgehen zur Durchführung der Operation des Eingebens des aktuellen Trainings-Handflächenbilds in das anfängliche Erkennungsmodell, bis eine Konvergenzbedingung erfüllt ist, um das Zielerkennungsmodell zu erhalten.

9. Verfahren nach Anspruch 1, wobei
die Referenzschrittlänge zunimmt, wenn eine Handflächengröße, die dem Ziel-Handflächenbild entspricht, zunimmt, und/oder die Referenzschrittlänge zunimmt, wenn eine Handflächentiefe, die dem Ziel-Handflächenbild entspricht, abnimmt.

10. Verfahren nach Anspruch 1, wobei das Verfahren vor dem Erhalten von Knochenpunktinformation für jeden der Handflächenknochenpunkte in dem Ziel-Handflächenbild ferner umfasst:
Anzeigen einer Handflächenkontur, die basierend auf einem Ziel-Handflächenbild extrahiert wird (S602); und
Erzeugen einer Objektsteuerungsanweisung basierend auf Anzeigeinformation der Handflächenkontur (S604).

11. Verfahren nach Anspruch 10, wobei das Erzeugen einer Objektsteuerungsanweisung basierend auf Anzeigeinformation der Handflächenkontur umfasst:
Erzeugen der Objektsteuerungsanweisung, wenn eine Positionsdifferenz zwischen einer Anzeigeposition der Handflächenkontur und einer Zielanzeigeposition kleiner als ein voreingestellter Schwellenwert ist; und
Erzeugen von Hinweisinformation basierend auf der Positionsdifferenz, wenn die Positionsdifferenz größer als oder gleich dem voreingestellten Schwellenwert ist, wobei die Hinweisinformation konfiguriert ist, um zum Bewegen der Handfläche aufzufordern, um die Positionsdifferenz zu verringern;
vorzugsweise ist das Ziel-Handflächenbild ein Handflächenbild, das einer virtuellen Ressourcentransferpartei entspricht, wobei die Objektsteuerungsanweisung eine Übertragungsanweisung ist zur Anweisung der Übertragung der virtuellen Ressource von einem Ressourcenkonto der virtuellen Ressourcentransferpartei auf ein Zielkonto.

12. Computervorrichtung, umfassend einen Speicher und ein oder mehrere Prozessoren, wobei der Speicher darin gespeicherte computerlesbare Anweisungen aufweist und wobei ein oder mehrere Prozessoren, beim Ausführen der computerlesbaren Anweisungen, die Operationen des Verfahrens nach einem der Ansprüche 1 bis 11 implementieren.

13. Computerlesbares Speichermedium, das darin gespeicherte computerlesbare Anweisungen aufweist, wobei die computerlesbaren Anweisungen, wenn sie von einem oder mehreren Prozessoren ausgeführt werden, die Operationen des Verfahrens nach einem der Ansprüche 1 bis 11 implementieren.

14. Computerprogrammprodukt, umfassend computerlesbare Anweisungen, wobei die computerlesbaren Anweisungen, wenn sie von einem oder mehreren Prozessoren ausgeführt werden, die Operationen des Verfahrens nach einem der Ansprüche 1 bis 11 implementieren.

## Revendications

1. Procédé d'extraction d'un contour de la paume, exécuté par un dispositif informatique, le procédé comprenant :
l'obtention d'informations de point osseux pour chacun des points osseux de la paume dans une image de paume cible, les informations de point osseux comprenant une position et un type de point osseux du point osseux de la paume respectif (S202) ;
la détermination d'une pluralité de groupes de points osseux de la paume à partir des points osseux de la paume sur la base du type de point osseux du point osseux de la paume respectif, chaque groupe de points osseux de la paume correspondant à au moins un type de traitement géométrique (S204) ;
l'exécution des étapes suivantes pour chacun des groupes de points osseux de la paume :
- la génération d'au moins une ligne auxiliaire sur la base des positions des points osseux de la paume dans le groupe de points osseux de la paume respectif selon le type de traitement géométrique correspondant (S206) ;
- la détermination d'au moins un point de contour de la paume sur l'au moins une ligne auxiliaire générée sur la base des positions des points osseux de la paume dans le groupe de points osseux de la paume respectif et d'une longueur de pas de référence, pour obtenir une position de chacun de l'au moins un point de contour de la paume déterminé correspondant au groupe de points osseux de la paume respectif (S208) ; et la génération du contour de la paume sur la base de la position de chacun de l'au moins un point de contour de la paume déterminé correspondant au groupe de points osseux de la paume respectif (S210) ;
dans lequel le type de point osseux est déterminé par un paramètre de doigt et un paramètre d'articulation intra-doigt, et la détermination d'une pluralité de groupes de points osseux de la paume à partir des points osseux de la paume sur la base du type de point osseux du point osseux de la paume respectif comprend :
la détermination d'un premier groupe de points osseux de la paume correspondant à un premier type de traitement géométrique, le premier groupe de points osseux de la paume comprenant des points osseux de la paume adjacents dont le paramètre d'articulation intra-doigt est un paramètre d'articulation prédéfini ;
la détermination d'un deuxième groupe de points osseux de la paume correspondant à un deuxième type de traitement géométrique, le deuxième groupe de points osseux de la paume comprenant des points osseux de la paume adjacents ayant le même paramètre de doigt ; et
la détermination d'un troisième groupe de points osseux de la paume correspondant à un troisième type de traitement géométrique, le troisième groupe de points osseux de la paume comprenant un point osseux de la paume avec un type de point osseux prédéfini et un point osseux de la paume le plus proche du point osseux de la paume avec le type de point osseux prédéfini.

2. Procédé selon la revendication 1, dans lequel la génération d'au moins une ligne auxiliaire sur la base des positions des points osseux de la paume dans le groupe de points osseux de la paume respectif selon le type de traitement géométrique correspondant comprend :
la détermination d'au moins un type de ligne auxiliaire sur la base du type de traitement géométrique respectif correspondant au groupe de points osseux de la paume respectif ;
la génération d'un segment de points osseux correspondant au groupe de points osseux de la paume respectif sur la base de la position du point osseux de la paume respectif dans le groupe de points osseux de la paume respectif ; et l'exécution d'un traitement géométrique sur le segment de points osseux sur la base du type de ligne auxiliaire respectif, pour obtenir l'au moins une ligne auxiliaire correspondant au groupe de points osseux de la paume respectif.

3. Procédé selon la revendication 2, dans lequel le type de traitement géométrique comprend l'un quelconque parmi un premier type de traitement géométrique, un deuxième type de traitement géométrique, ou un troisième type de traitement géométrique, un type de ligne auxiliaire correspondant au premier type de traitement géométrique comprend au moins l'un parmi un type de médiatrice ou un type de ligne de prolongement, un type de ligne auxiliaire correspondant au deuxième type de traitement géométrique comprend un type de normale, et un type de ligne auxiliaire correspondant au troisième type de traitement géométrique comprend au moins l'un parmi un type de normale ou un type de ligne de prolongement.

4. Procédé selon la revendication 3, dans lequel l'exécution d'un traitement géométrique sur le segment de points osseux sur la base du type de ligne auxiliaire respectif, pour obtenir l'au moins une ligne auxiliaire correspondant au groupe de points osseux de la paume respectif comprend :
lorsque le type de ligne auxiliaire respectif est un type de médiatrice, l'utilisation d'une médiatrice du segment de points osseux en tant que ligne auxiliaire ;
lorsque le type de ligne auxiliaire respectif est un type de ligne de prolongement, la détermination d'un point osseux cible à partir des points osseux de la paume dans le groupe de points osseux de la paume respectif, et l'utilisation d'une ligne de prolongement qui correspond au segment de points osseux et qui commence au point osseux cible en tant que ligne auxiliaire ; et
lorsque le type de ligne auxiliaire respectif est un type de normale, la détermination d'un point osseux cible à partir des points osseux de la paume dans le groupe de points osseux de la paume respectif, et l'utilisation d'une normale du segment de points osseux au point osseux cible en tant que ligne auxiliaire.

5. Procédé selon la revendication 1, dans lequel la détermination d'au moins un point de contour de la paume sur l'au moins une ligne auxiliaire générée sur la base des positions des points osseux de la paume dans le groupe de points osseux de la paume respectif et d'une longueur de pas de référence, pour obtenir une position de chacun de l'au moins un point de contour de la paume déterminé correspondant au groupe de points osseux de la paume respectif comprend :
la génération, sur la base de la position du point osseux de la paume respectif dans le groupe de points osseux de la paume respectif, d'un segment de points osseux correspondant au groupe de points osseux de la paume respectif ;
la détermination d'un point de référence sur le segment de points osseux ; et
le déplacement sur la ligne auxiliaire respective générée, à partir du point de référence, dans une direction de déplacement correspondant à la ligne auxiliaire respective, de la longueur de pas de référence correspondant au groupe de points osseux de la paume respectif, pour obtenir un point de contour de la paume et une position du point de contour de la paume obtenu.

6. Procédé selon la revendication 5, dans lequel la ligne auxiliaire respective comprend au moins l'une parmi une médiatrice, une ligne de prolongement, ou une normale, une direction de déplacement correspondant à la médiatrice est une direction s'éloignant du centre d'une paume, une direction de déplacement correspondant à la ligne de prolongement est une direction de prolongement du segment de points osseux, et une direction de déplacement correspondant à la normale est une direction perpendiculaire au segment de points osseux.

7. Procédé selon la revendication 1, dans lequel chacun des points osseux de la paume possède un identifiant correspondant, et la génération du contour de la paume sur la base de la position de chacun de l'au moins un point de contour de la paume déterminé correspondant au groupe de points osseux de la paume respectif comprend :
la détermination, sur la base des identifiants des points osseux de la paume dans le groupe de points osseux de la paume respectif et d'informations de mappage prédéfinies, d'un identifiant de chacun de l'au moins un point de contour de la paume déterminé correspondant au groupe de points osseux de la paume respectif pour indiquer un ordre de tri du point de contour de la paume respectif, dans lequel les informations de mappage prédéfinies comprennent une relation de mappage entre les identifiants des points osseux de la paume dans le groupe de points osseux de la paume respectif et l'identifiant de chacun de l'au moins un point de contour de la paume déterminé sur la base du groupe de points osseux de la paume respectif ; et
la connexion des positions des points de contour de la paume dans l'ordre indiqué par les identifiants des points de contour de la paume, pour obtenir le contour de la paume correspondant à l'image de paume cible.

8. Procédé selon la revendication 1, dans lequel l'obtention d'informations de point osseux pour chacun des points osseux de la paume dans une image de paume cible comprend :
la saisie de l'image de paume cible dans un modèle de reconnaissance cible qui a été entraîné à reconnaître des informations de point osseux, pour obtenir les informations de point osseux pour chacun des points osseux de la paume ; et
un processus d'entraînement du modèle de reconnaissance cible comprend les opérations suivantes :
l'obtention d'un ensemble de données d'entraînement, dans lequel l'ensemble de données d'entraînement comprend une pluralité d'images de paume d'entraînement et des informations de points osseux d'entraînement pour chacune des images de paume d'entraînement ;
la sélection d'une image de paume d'entraînement courante à partir de l'ensemble de données d'entraînement ;
la saisie de l'image de paume d'entraînement courante dans un modèle de reconnaissance initial pour prédire des informations de point osseux, pour obtenir des informations de points osseux prédites pour l'image de paume d'entraînement courante ;
l'ajustement d'un paramètre de modèle du modèle de reconnaissance initial sur la base d'une différence entre les informations de points osseux prédites et les informations de points osseux d'entraînement pour l'image de paume d'entraînement courante, pour obtenir un modèle de reconnaissance intermédiaire ; et
l'utilisation d'une prochaine image de paume d'entraînement en tant qu'image de paume d'entraînement courante,
l'utilisation du modèle de reconnaissance intermédiaire en tant que modèle de reconnaissance initial, et le retour à l'exécution de l'opération de saisie de l'image de paume d'entraînement courante dans le modèle de reconnaissance initial jusqu'à ce qu'une condition de convergence soit satisfaite, pour obtenir le modèle de reconnaissance cible.

9. Procédé selon la revendication 1, dans lequel la longueur de pas de référence augmente à mesure que la taille de la paume correspondant à l'image de paume cible augmente, et/ou
la longueur de pas de référence augmente à mesure que la profondeur de la paume correspondant à l'image de paume cible diminue.

10. Procédé selon la revendication 1, dans lequel avant l'obtention d'informations de point osseux pour chacun des points osseux de la paume dans l'image de paume cible, le procédé comprend en outre :
l'affichage d'un contour de la paume qui est extrait sur la base d'une image de paume cible (S602) ; et
la génération d'une instruction de contrôle d'objet sur la base d'informations d'affichage du contour de la paume (S604).

11. Procédé selon la revendication 10, dans lequel la génération d'une instruction de contrôle d'objet sur la base d'informations d'affichage du contour de la paume comprend :
la génération de l'instruction de contrôle d'objet lorsqu'une différence de position entre une position d'affichage du contour de la paume et une position d'affichage cible est inférieure à un seuil prédéfini ; et
la génération d'informations d'invite sur la base de la différence de position lorsque la différence de position est supérieure ou égale au seuil prédéfini, dans lequel les informations d'invite sont configurées pour inviter à déplacer la paume afin de réduire la différence de position ;
de préférence, l'image de paume cible est une image de paume correspondant à une partie de transfert de ressource virtuelle, l'instruction de contrôle d'objet est une instruction de transfert pour ordonner le transfert de la ressource virtuelle d'un compte de ressources de la partie de transfert de ressource virtuelle vers un compte cible.

12. Dispositif informatique, comprenant une mémoire et un ou plusieurs processeurs, la mémoire ayant des instructions lisibles par ordinateur qui y sont stockées, et le ou les processeurs, lors de l'exécution des instructions lisibles par ordinateur, mettant en œuvre les opérations du procédé selon l'une quelconque des revendications 1 à 11.

13. Support de stockage lisible par ordinateur, ayant des instructions lisibles par ordinateur qui y sont stockées, les instructions lisibles par ordinateur, lorsqu'elles sont exécutées par un ou plusieurs processeurs, mettant en œuvre les opérations du procédé selon l'une quelconque des revendications 1 à 11.

14. Produit de programme informatique, comprenant des instructions lisibles par ordinateur, les instructions lisibles par ordinateur, lorsqu'elles sont exécutées par un ou plusieurs processeurs, mettant en œuvre les opérations du procédé selon l'une quelconque des revendications 1 à 11.
